(19) Europäisches Patentamt
European Patent Office
Office européen des brevets

(11) **EP 4 478 694 A1**

(12) **EUROPEAN PATENT APPLICATION**
published in accordance with Art. 153(4) EPC

(43) Date of publication:
**18.12.2024 Bulletin 2024/51**

(21) Application number: **23862206.2**

(22) Date of filing: **28.08.2023**

(51) International Patent Classification (IPC):
***H04M 1/58*** (2006.01)

(52) Cooperative Patent Classification (CPC):
**H04M 1/19; H04M 1/58**

(86) International application number:
**PCT/CN2023/115238**

(87) International publication number:
**WO 2024/051510 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.09.2022 CN 202211100941**

(71) Applicant: **Honor Device Co., Ltd.
Shenzhen, Guangdong 518040 (CN)**

(72) Inventors:
• **YANG, Xiao**
**Shenzhen, Guangdong 518040 (CN)**
• **WANG, Chuanguo**
**Shenzhen, Guangdong 518040 (CN)**

• **CHENG, Youhong**
**Shenzhen, Guangdong 518040 (CN)**
• **DING, Ge**
**Shenzhen, Guangdong 518040 (CN)**
• **QIU, Zhiqiang**
**Shenzhen, Guangdong 518040 (CN)**
• **XUAN, Jianyong**
**Shenzhen, Guangdong 518040 (CN)**
• **YU, Ligang**
**Shenzhen, Guangdong 518040 (CN)**
• **CHU, Jianfei**
**Shenzhen, Guangdong 518040 (CN)**

(74) Representative: **Isarpatent
Patent- und Rechtsanwälte
Barth Hassa Peckmann & Partner mbB
Friedrichstraße 31
80801 München (DE)**

(54) **ELECTRONIC DEVICE, AND PARAMETER DETERMINATION METHOD AND APPARATUS FOR ELECTRONIC DEVICE**

(57)    Embodiments of this application provide an electronic device and a parameter determining method and apparatus for an electronic device. The electronic device includes a first sound emitting unit, a second sound emitting unit, a first delay compensation unit, a first phase compensation unit, and a first amplitude compensation unit. The first delay compensation unit is configured to adjust, based on a first delay compensation function, a delay of a first original audio signal to be played by the first sound emitting unit, to obtain a first playing audio signal. The first sound emitting unit is configured to emit a first playing sound signal based on the first playing audio signal. The first phase compensation unit and the first amplitude compensation unit are configured to respectively adjust a phase and an amplitude of the first original audio signal based on a first phase compensation function and a first amplitude compensation function, to obtain a first cancellation audio signal. The second sound emitting unit is configured to emit a first cancellation sound signal based on the first cancellation audio signal. This can effectively reduce a leaked sound of the electronic device.

FIG. 2A

## Description

This application claims priority to Chinese Patent Application No. 202211100941.3, filed with the China National Intellectual Property Administration on September 8, 2022 and entitled "ELECTRONIC DEVICE AND PARAMETER DETERMINING METHOD AND APPARATUS FOR ELECTRONIC DEVICE", which is incorporated herein by reference in its entirety.

## TECHNICAL FIELD

This application relates to the field of multimedia technologies, and in particular, to an electronic device and a parameter determining method and apparatus for an electronic device.

## BACKGROUND

In a related technology, with continuous updating of mobile phones, a proportion of a screen in an operating surface of a mobile terminal is increasingly large. Therefore, sound emitting units originally located in the operating surface of the mobile phone are disposed inside the screen. In this specification, these sound emitting units are referred to as components that push the screen to emit a sound. To enable a user to more clearly hear, during a call, a call sound signal emitted by the component that pushes the screen to emit a sound, sound intensity of the call sound signal emitted by the component that pushes the screen to emit a sound needs to be high enough.

In this case, sound intensity of a sound signal leaked to surrounding space synchronously increases, and as a result, a person around the mobile phone can also clearly hear content of a user call, leading to leakage of user privacy.

## SUMMARY

Embodiments of this application are intended to provide an electronic device and a parameter determining method and apparatus for an electronic device, to reduce a leaked sound of the electronic device. Specific technical solutions are as follows:

According to a first aspect of this application, an electronic device is provided. The electronic device includes a first sound emitting unit, a second sound emitting unit, a first delay compensation unit, a first phase compensation unit, and a first amplitude compensation unit.

The first delay compensation unit is configured to adjust, based on a first delay compensation function, a delay of a first original audio signal to be played by the first sound emitting unit, to obtain a first playing audio signal.

The first sound emitting unit is configured to emit a first playing sound signal based on the first playing audio signal.

The first phase compensation unit and the first amplitude compensation unit are configured to adjust a phase and an amplitude of the first original audio signal based on a first phase compensation function and a first amplitude compensation function, to obtain a first cancellation audio signal.

The second sound emitting unit is configured to emit a first cancellation sound signal based on the first cancellation audio signal.

In a possible embodiment, the first delay compensation function is a delay compensation function that is determined based on a first transfer function and a second transfer function and that enables the first playing sound signal and the first cancellation sound signal to cancel each other out at a first measurement point, the first transfer function is a transfer function from a sound signal of the first sound emitting unit to the first measurement point, and the second transfer function is a transfer function from a sound signal played by the second sound emitting unit to the first measurement point; and the first phase compensation function is a phase compensation function that is determined based on the first transfer function and the second transfer function and that enables the first playing sound signal and the first cancellation sound signal to cancel each other out at the first measurement point, and the first amplitude compensation function is an amplitude compensation function that is determined based on the first transfer function and the second transfer function and that enables the first playing sound signal and the first cancellation sound signal to cancel each other out at the first measurement point. In a possible embodiment, the electronic device further includes a second delay compensation unit, a second phase compensation unit, and a second amplitude compensation unit; the second delay compensation unit is configured to adjust, based on a second delay compensation function, a delay of a second original audio signal to be played by the second sound emitting unit, to obtain a second playing audio signal; the second sound emitting unit is further configured to emit a second playing sound signal based on the second playing audio signal; the second phase compensation unit and the second amplitude compensation unit are configured to adjust a phase and an amplitude of the second original audio signal based on a second phase compensation function and a second amplitude compensation function, to obtain a second cancellation audio signal; and the first sound emitting unit is further configured to emit a second cancellation sound signal based on the second cancellation audio. The second delay compensation function is a delay compensation function that is determined based on the first transfer function and the second transfer function and that enables the second playing sound signal and the second cancellation sound signal to cancel each other out at the first measurement point, the second phase compensation function is a phase compensation function that is determined based on the first transfer function and the second transfer function and that enables the second playing sound signal and the second cancellation sound signal to cancel each other out at the first measurement point, and the second amplitude compensation function is an amplitude compensation function that is determined based on the first transfer function and the second transfer function and that enables the second playing sound signal and the second cancellation sound signal to cancel each other out at the first measurement point. In a possible embodiment, the first sound emitting unit is a component that pushes a screen to emit a sound, the second audio playing unit is a top speaker, the first original audio signal is an audio sub-signal that is located in a first band and that is in an audio signal to be played by the electronic device, the second original audio signal is an audio sub-signal that is located in a second band and that is in the audio signal to be played by the electronic device, and a lower limit of the second band is greater than an upper limit of the first band. In a possible embodiment, the first sound emitting unit is a component that pushes a screen to emit a sound, the second audio playing unit is a top speaker, and the electronic device further includes a bottom speaker, a third phase compensation unit, and a third amplitude compensation unit; the third phase compensation unit and the third amplitude compensation unit are configured to adjust the phase and the amplitude of the first original audio signal based on a third phase compensation function and a third amplitude compensation function, to obtain a third cancellation audio signal; and the bottom speaker is configured to emit a third cancellation sound signal based on the third cancellation audio. The third phase compensation function is a phase compensation function that is determined based on a third transfer function and a fourth transfer function and that enables the first playing sound signal and the third cancellation sound signal to cancel each other out at a second measurement point, the third transfer function is a transfer function from a sound signal of the first sound emitting unit to the second measurement point, the fourth transfer function is a transfer function from a sound signal of the bottom speaker to the second measurement point, the third amplitude compensation function is an amplitude compensation function that is determined based on the third transfer function and the fourth transfer function and that enables the first playing sound signal and the third cancellation sound signal to cancel each other out at the second measurement point, a distance between the first measurement point and the top speaker is less than a distance between the first measurement point and the bottom speaker, and a distance between the second measurement point and the top speaker is greater than a distance between the second measurement point and the bottom speaker. In a possible embodiment, the first sound emitting unit is a component that pushes a screen to emit a sound, the second sound emitting unit is a top speaker, and the first original audio signal is an audio sub-signal that is located in a third band and that is in an audio signal to be played by the electronic device; or the first sound emitting unit is a top speaker, the second sound emitting unit is a component that pushes a screen to emit a sound, the first original audio signal is an audio sub-signal that is located in a fourth band and that is in an audio signal to be played by the electronic device, and a lower limit of the fourth band is greater than an upper limit of the third band. In a possible embodiment, one or more of the first delay compensation function, the first phase compensation function, and the first amplitude compensation function are adjusted based on sound intensity of a measured sound signal and a superimposed sound signal, the measured sound signal is a sound signal that is of a target band at the first measurement point and that exists when the electronic device plays an audio signal, the target band is a band in which the first original audio signal is located, and the superimposed sound signal is a superimposed signal that is of the first playing sound signal and the first cancellation sound signal at the first measurement point and that is determined based on the first transfer function, a second transfer function, the first delay compensation function, the first phase compensation function, and the first amplitude compensation function. In a possible embodiment, the electronic device further includes a microphone; and the measured sound signal is a sound signal, at the first measurement point, that is determined based on an ambient sound signal that is of the target band and that is collected by the microphone when the electronic device plays the audio signal. In a possible embodiment, the measured sound signal is a sound signal, at the first measurement point, that is determined based on a reverse transfer function and the ambient sound signal that is of the target band and that is collected by the microphone when the electronic device plays the audio signal, and the reverse transfer function is a measured transfer function from a sound signal to the microphone, where the sound signal is emitted by the first measurement point. In a possible embodiment, there are a plurality of microphones, the reverse transfer function is a measured transfer function from a sound signal to each microphone, where the sound signal is emitted by the first measurement point, and the measured sound signal is a sound signal, at the first measurement point, that is determined based on the reverse transfer function of each microphone and an ambient sound signal collected by each microphone when the electronic device plays the audio signal. In a possible embodiment, the first sound emitting unit is a top speaker, the second sound emitting unit is a component that pushes a screen to emit a sound, and the first measurement point is located between the top speaker and the component that pushes the screen to emit a sound, and is located on a side close to the screen of the electronic device.

According to a second aspect of this application, a parameter determining method for an electronic device is provided. The electronic device includes a first sound emitting unit, a second sound emitting unit, a first delay compensation unit, a first phase compensation unit, and a first amplitude compensation unit; the first delay compensation unit is configured to adjust, based on a first delay compensation function, a delay of a first original audio signal to be played by the first sound emitting unit, to obtain a first playing audio signal, and the first sound emitting unit is configured to emit a first playing sound signal based on the first playing audio signal; the first phase compensation unit and a second amplitude compensation unit are configured to adjust a phase and an amplitude of the first original audio signal based on a first phase compensation function and a first amplitude compensation function, to obtain a first cancellation audio signal; and the second sound emitting unit is configured to emit a first cancellation sound signal based on the first cancellation audio signal.

The method includes:

determining a first transfer function from a sound signal of the first sound emitting unit to a first measurement point and a second transfer function from a sound signal played by the second sound emitting unit to the first measurement point; and

determining, based on the first transfer function and the second transfer function, the first delay compensation function, the first phase compensation function, and the first amplitude compensation function that enable the first playing sound signal and the first cancellation sound signal to cancel each other out at the first measurement point.

In a possible embodiment, the electronic device further includes a second delay compensation unit, a second phase compensation unit, and a second amplitude compensation unit; the second delay compensation unit is configured to adjust, based on a second delay compensation function, a delay of a second original audio signal to be played by the second sound emitting unit, to obtain a second playing audio signal, and the second sound emitting unit is further configured to emit a second playing sound signal based on the second playing audio signal; the second phase compensation unit and the second amplitude compensation unit are configured to adjust a phase and an amplitude of the second original audio signal based on a second phase compensation function and a second amplitude compensation function, to obtain a second cancellation audio signal; and the first sound emitting unit is further configured to emit a second cancellation sound signal based on the second cancellation audio. The method further includes: determining, based on the first transfer function and the second transfer function, the second delay compensation function, the second phase compensation function, and the second amplitude compensation function that enable the second playing sound signal and the second cancellation sound signal to cancel each other out at the first measurement point. In a possible embodiment, the first sound emitting unit is a component that pushes a screen to emit a sound, the second audio playing unit is a top speaker, the first original audio signal is an audio sub-signal that is located in a first band and that is in an audio signal to be played by the electronic device, the second original audio signal is an audio sub-signal that is located in a second band and that is in the audio signal to be played by the electronic device, and a lower limit of the second band is greater than an upper limit of the first band. In a possible embodiment, the first sound emitting unit is a component that pushes a screen to emit a sound, the second audio playing unit is a top speaker, and the electronic device further includes a bottom speaker, a third phase compensation unit, and a third amplitude compensation unit; the third phase compensation unit and the third amplitude compensation unit are configured to adjust the phase and the amplitude of the first original audio signal based on a third phase compensation function and a third amplitude compensation function, to obtain a third cancellation audio signal; and the bottom speaker is configured to emit a third cancellation sound signal based on the third cancellation audio signal. The method further includes: determining a third transfer function from a sound signal of the first sound emitting unit to a second measurement point and a fourth transfer function from a sound signal played by the bottom speaker to the second measurement point; and determining, based on the third transfer function and the fourth transfer function, the third phase compensation function and the third amplitude compensation function that enable the first playing sound signal and the third cancellation sound signal to cancel each other out at the second measurement point. A distance between the first measurement point and the top speaker is less than a distance between the first measurement point and the bottom speaker, and a distance between the second measurement point and the top speaker is greater than a distance between the second measurement point and the bottom speaker. In a possible embodiment, the first sound emitting unit is a component that pushes a screen to emit a sound, the second sound emitting unit is a top speaker, the first original audio signal is an audio sub-signal that is located in a third band and that is in an audio signal to be played by the electronic device, a frequency lower limit of the third band is greater than a first threshold, and a frequency upper limit of the third band is less than a second threshold. In a possible embodiment, the method further includes: determining a sound signal that is of a target band at the first measurement point and that exists when the electronic device plays an audio signal, and using the sound signal as a measured sound signal, where the target band is a band in which the first original audio signal is located; determining a superimposed sound signal of the first playing sound signal and the first cancellation sound signal at the first measurement point based on the first transfer function, the second transfer function, the first delay compensation function, the first phase compensation function, and the first amplitude compensation function; and adjusting one or more of the first delay compensation function, the first phase compensation function, and the first amplitude compensation function based on sound intensity of the measured sound signal and the superimposed sound signal. In a possible embodiment, the electronic device further includes a microphone; and the determining a sound signal that is of a target band at the first measurement point and that exists when the electronic device plays an audio signal, and using the sound signal as a measured sound signal includes: determining an obtained sound signal at the first measurement point based on an ambient sound signal that is of the target band and that is collected by the microphone when the electronic device plays the audio signal, and using the sound signal as the measured sound signal. In a possible embodiment, the determining an obtained sound signal at the first measurement point based on an ambient sound signal that is of the target band and that is collected by the microphone when the electronic device plays the audio signal, and using the sound signal as the measured sound signal includes: measuring a reverse transfer function from a sound signal to the microphone, where the sound signal is emitted by the first measurement point; and determining the sound signal at the first measurement point based on the reverse transfer function and the ambient sound signal that is of the target band and that is collected by the microphone when the electronic device plays the audio signal, and using the sound signal as the measured sound signal. In a possible embodiment, there are a plurality of microphones; and the determining an obtained sound signal at the first measurement point based on an ambient sound signal that is of the target band and that is collected by the microphone when the electronic device plays the audio signal, and using the sound signal as the measured sound signal includes: measuring a reverse transfer function from a sound signal to each microphone, where the sound signal is emitted by the first measurement point; and determining the sound signal at the first measurement point based on the reverse transfer function of each microphone and an ambient sound signal collected by each microphone when the electronic device plays the audio signal, and using the sound signal as the measured sound signal. In a possible embodiment, the first sound emitting unit is a top speaker, the second sound emitting unit is a component that pushes a screen to emit a sound, and the first measurement point is located between the top speaker and the component that pushes the screen to emit a sound, and is located on a side close to the screen of the electronic device.

According to a third aspect of this application, a parameter determining apparatus for an electronic device is provided. The electronic device includes a first sound emitting unit, a second sound emitting unit, a first delay compensation unit, a first phase compensation unit, and a first amplitude compensation unit; the first delay compensation unit is configured to adjust, based on a first delay compensation function, a delay of a first original audio signal to be played by the first sound emitting unit, to obtain a first playing audio signal, and the first sound emitting unit is configured to emit a first playing sound signal based on the first playing audio signal; the first phase compensation unit and the first amplitude compensation unit are configured to adjust a phase and an amplitude of the first original audio signal based on a first phase compensation function and a first amplitude compensation function, to obtain a first cancellation audio signal; and the second sound emitting unit is configured to emit a first cancellation sound signal based on the first cancellation audio signal.

The apparatus includes:

a transfer function determining module, configured to determine a first transfer function from a sound signal of the first sound emitting unit to a first measurement point and a second transfer function from a sound signal played by the second sound emitting unit to the first measurement point; and
a compensation function determining module, configured to determine, based on the first transfer function and the second transfer function, the first delay compensation function, the first phase compensation function, and the first amplitude compensation function that enable the first playing sound signal and the first cancellation sound signal to cancel each other out at the first measurement point.

In a possible embodiment, the electronic device further includes a second delay compensation unit, a second phase compensation unit, and a second amplitude compensation unit; the second delay compensation unit is configured to adjust, based on a second delay compensation function, a delay of a second original audio signal to be played by the second sound emitting unit, to obtain a second playing audio signal, and the second sound emitting unit is further configured to emit a second playing sound signal based on the second playing audio signal; the second phase compensation unit and the second amplitude compensation unit are configured to adjust a phase and an amplitude of the second original audio signal based on a second phase compensation function and a second amplitude compensation function, to obtain a second cancellation audio signal; and the first sound emitting unit is further configured to emit a second cancellation sound signal based on the second cancellation audio; and the compensation function determining module is further configured to determine, based on the first transfer function and the second transfer function, the second delay compensation function, the second phase compensation function, and the second amplitude compensation function that enable the second playing sound signal and the second cancellation sound signal to cancel each other out at the first measurement point. In a possible embodiment, the first sound emitting unit is a component that pushes a screen to emit a sound, the second audio playing unit is a top speaker, the first original audio signal is an audio sub-signal that is located in a first band and that is in an audio signal to be played by the electronic device, the second original audio signal is an audio sub-signal that is located in a second band and that is in the audio signal to be played by the electronic device, and a lower limit of the second band is greater than an upper limit of the first band. In a possible embodiment, the first sound emitting unit is a component that pushes a screen to emit a sound, the second audio playing unit is a top speaker, and the electronic device further includes a bottom speaker, a third phase compensation unit, and a third amplitude compensation unit; the third phase compensation unit and the third amplitude compensation unit are configured to adjust the phase and the amplitude of the first original audio signal based on a third phase compensation function and a third amplitude compensation function, to obtain a third cancellation audio signal; the bottom speaker is configured to emit a third cancellation sound signal based on the third cancellation audio signal; the transfer function determining module is further configured to determine a third transfer function from a sound signal of the first sound emitting unit to a second measurement point and a fourth transfer function from a sound signal played by the bottom speaker to the second measurement point; and the compensation function determining module is further configured to determine, based on the third transfer function and the fourth transfer function, the third phase compensation function and the third amplitude compensation function that enable the first playing sound signal and the third cancellation sound signal to cancel each other out at the second measurement point. A distance between the first measurement point and the top speaker is less than a distance between the first measurement point and the bottom speaker, and a distance between the second measurement point and the top speaker is greater than a distance between the second measurement point and the bottom speaker. In a possible embodiment, the first sound emitting unit is a component that pushes a screen to emit a sound, the second sound emitting unit is a top speaker, the first original audio signal is an audio sub-signal that is located in a third band and that is in an audio signal to be played by the electronic device, a frequency lower limit of the third band is greater than a first threshold, and a frequency upper limit of the third band is less than a second threshold. In a possible embodiment, the apparatus further includes an adaptive adjustment module, configured to: determine a sound signal that is of a target band at the first measurement point and that exists when the electronic device plays an audio signal, and use the sound signal as a measured sound signal, where the target band is a band in which the first original audio signal is located; determine a superimposed sound signal of the first playing sound signal and the first cancellation sound signal at the first measurement point based on the first transfer function, the second transfer function, the first delay compensation function, the first phase compensation function, and the first amplitude compensation function; and adjust one or more of the first delay compensation function, the first phase compensation function, and the first amplitude compensation function based on sound intensity of the measured sound signal and the superimposed sound signal. In a possible embodiment, the electronic device further includes a microphone; and that an adaptive adjustment module determines a sound signal that is of a target band at the first measurement point and that exists when the electronic device plays an audio signal, and uses the sound signal as a measured sound signal includes: determining an obtained sound signal at the first measurement point based on an ambient sound signal that is of the target band and that is collected by the microphone when the electronic device plays the audio signal, and using the sound signal as the measured sound signal. In a possible embodiment, that an adaptive adjustment module determines a sound signal that is of a target band at the first measurement point and that exists when the electronic device plays an audio signal, and uses the sound signal as a measured sound signal includes: measuring a reverse transfer function from a sound signal to the microphone, where the sound signal is emitted by the first measurement point; and determining the sound signal at the first measurement point based on the reverse transfer function and the ambient sound signal that is of the target band and that is collected by the microphone when the electronic device plays the audio signal, and using the sound signal as the measured sound signal. In a possible embodiment, there are a plurality of microphones; and that an adaptive adjustment module determines a sound signal that is of a target band at the first measurement point and that exists when the electronic device plays an audio signal, and uses the sound signal as a measured sound signal includes: measuring a reverse transfer function from a sound signal to each microphone, where the sound signal is emitted by the first measurement point; and determining the sound signal at the first measurement point based on the reverse transfer function of each microphone and an ambient sound signal collected by each microphone when the electronic device plays the audio signal, and using the sound signal as the measured sound signal. In a possible embodiment, the first sound emitting unit is a top speaker, the second sound emitting unit is a component that pushes a screen to emit a sound, and the first measurement point is located between the top speaker and the component that pushes the screen to emit a sound, and is located on a side close to the screen of the electronic device.

The embodiments of this application have the following beneficial effects:

According to the electronic device and the parameter determining method and apparatus for an electronic device that are provided in this application, a delay of a sound signal may be adjusted by using the first delay compensation function. Therefore, the first playing audio signal and the first original audio signal have different delays but have a same frequency. The first phase compensation function is used to adjust a phase of the sound signal while keeping an amplitude of the sound signal unchanged, and the first amplitude compensation function is used to adjust the amplitude of the sound signal. Therefore, the first cancellation audio signal and the first original audio signal have different phases and amplitudes but have a same frequency. In addition, because of the action of the first phase compensation function and the first amplitude compensation function, a delay of the obtained first cancellation audio signal is also different from that of the first original audio signal. Therefore, theoretically, using a proper first delay compensation function can enable the first playing audio signal and the first cancellation audio signal to have a same frequency and delay but have different phases and amplitudes. Therefore, the first playing sound signal emitted based on the first playing audio signal and the first cancellation sound signal emitted based on the first cancellation audio signal are two coherent sound signals. It can be learned from an acoustic principle that if at a spatial point, two coherent sound signals have opposite phases but have close amplitudes or a same amplitude, sound intensity of a superimposed sound signal formed by superimposing the two coherent sound signals at the spatial point is relatively low or even is 0. This phenomenon is referred to as cancellation in this specification. Therefore, using a proper first phase compensation function and first amplitude compensation function can enable the first cancellation sound signal to cancel out the first playing sound signal, to effectively reduce leakage of the first playing sound signal.

Certainly, any product or method for implementing this application may not need to achieve all the advantages described above.

## BRIEF DESCRIPTION OF DRAWINGS

The accompanying drawings described herein are used for providing a further understanding of this application, and constitute a part of this application. Example embodiments of this application and descriptions thereof are used for explaining this application, but do not constitute any inappropriate limitation on this application.

FIG. 1A is a schematic diagram of a hardware structure of an electronic device according to this application;

FIG. 1B is a schematic diagram of distribution of a sound signal when a user uses an electronic device audio channel in a conventional technology according to an embodiment of this application;

FIG. 2A is a schematic diagram of structural composition of an electronic device according to an embodiment of this application;

FIG. 2B is a schematic diagram of structural distribution of an electronic device according to an embodiment of this application;

FIG. 3 is a schematic flowchart of a parameter determining method for an electronic device according to an embodiment of this application;

FIG. 4 is a schematic diagram of a manner of setting a first measurement point according to an embodiment of this application;

FIG. 5A is a schematic diagram of a system framework of an electronic device according to an embodiment of this application;

FIG. 5B is a schematic diagram of frequency distribution of Voice1 of an electronic device according to an embodiment of this application;

FIG. 5C is a schematic diagram of frequency distribution of Voice2 and Voice1_R of an electronic device according to an embodiment of this application;

FIG. 6 is a side view and a top view of an electronic device according to an embodiment of this application;

FIG. 7 is a schematic diagram of a manner of setting a first measurement point in a speaker-mode playing scenario of an electronic device according to an embodiment of this application;

FIG. 8 is a schematic diagram of another structure of an electronic device according to an embodiment of this application;

FIG. 9A is a schematic diagram of another system framework of an electronic device according to an embodiment of this application;

FIG. 9B is a schematic diagram of sound emitting frequency distribution of a ceramic component and a top speaker of an electronic device according to an embodiment of this application;

FIG. 10 is a schematic flowchart of a method for adaptively adjusting a compensation function according to an embodiment of this application;

FIG. 11 is a schematic diagram of a principle of measuring a reverse transfer function according to an embodiment of this application;

FIG. 12 is a schematic diagram of another system framework of an electronic device according to an embodiment of this application;

FIG. 13 is a schematic diagram of another system framework of an electronic device according to an embodiment of this application;

FIG. 14 is a schematic diagram of another structure of an electronic device according to an embodiment of this application;

FIG. 15 is a schematic diagram of a principle of canceling out, by an electronic device by jointly using a top speaker and a bottom speaker, a sound signal emitted by a component that pushes a screen to emit a sound according to this application;

FIG. 16 is a schematic diagram of another system framework of an electronic device according to an embodiment of this application; and

FIG. 17 is a schematic diagram of a structure of a parameter determining apparatus for an electronic device according to an embodiment of this application.

## DESCRIPTION OF EMBODIMENTS

To clearly describe the technical solutions in the embodiments of this application, in the embodiments of this application, words such as "first" and "second" are used to distinguish between same items or similar items with basically same functions and effects. For example, a first instruction and a second instruction are intended to distinguish between different user instructions, but not to limit a sequential order thereof. A person skilled in the art may understand that the words such as "first" and "second" do not limit a quantity and an execution sequence, and the words such as "first" and "second" do not indicate a definite difference.

It should be noted that in this application, words such as "example" or "for example" are used to indicate an example, an illustration, or a description. Any embodiment or design solution described as "example" or "for example" in this application should not be construed as being preferred or advantageous than other embodiments or design solutions. Exactly, use of the words such as "example" or "for example" is intended to present a related concept in a specific manner.

Moreover, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items" or a similar expression thereof means any combination of these items, including a single item or any combination of a plurality of items. For example, "at least one of a, b, and c" may represent a, b, c, a and b, a and c, b and c, or a, b, and c, where a, b, and c may be singular or plural.

For ease of understanding of the following descriptions, two concepts: "sound signal" and "audio signal" appearing in the following descriptions are described herein. In the following descriptions, an audio signal is an electrical signal that carries audio related information, and a sound signal refers to an acoustic wave. The sound signal may be converted into an audio signal by using an audio input device such as a microphone, and the audio signal may be converted into a sound signal by using an audio output device such as an audio system or a headset.

Implementations of the embodiments of this application are described below in detail with reference to the accompanying drawings.

To more clearly describe an electronic device provided in the embodiments of this application, the following describes, by using an example, a possible application scenario of the electronic device provided in the embodiments of this application. It may be understood that the following example is only a possible application scenario of the electronic device provided in the embodiments of this application. In another possible embodiment, the electronic device provided in the embodiments of this application may alternatively be applied to another possible application scenario. The following example sets no limitation thereto.

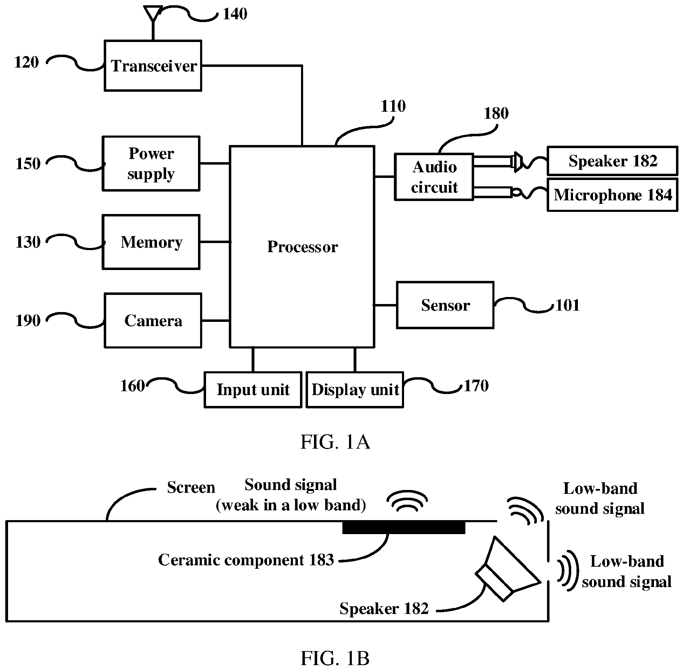

Refer to FIG. 1A. FIG. 1A is a schematic diagram of a hardware structure of an electronic device to which a sound processing method is applicable according to an embodiment of this application.

The electronic device includes a processor 110, a transceiver 120, and a display unit 170. The display unit 170 may include a display.

Optionally, the electronic device may further include a memory 130. The processor 110, the transceiver 120, and the memory 130 may communicate with each other by using an internal connection path, to transfer a control signal and/or a data signal. The memory 130 is configured to store a computer program. The processor 110 is configured to invoke the computer program from the memory 130 and run the computer program.

Optionally, the electronic device may further include an antenna 140, configured to send a radio signal output by the transceiver 120.

The processor 110 and the memory 130 may be combined into a processing apparatus, and more commonly, may be components independent of each other. The processor 110 is configured to execute program code stored in the memory 130 to implement the foregoing function. During specific implementation, the memory 130 may be integrated into the processor 110, or may be independent of the processor 110.

In addition, to achieve more comprehensive functions for the electronic device, the electronic device may further include one or more of an input unit 160, an audio circuit 180, a camera 190, a sensor 101, and the like. The audio circuit may further include a speaker 182, a microphone 184, and the like.

Optionally, the electronic device may further include a power supply 150, configured to supply power to various components or circuits in the electronic device.

It may be understood that operations and/or functions of the modules in the electronic device shown in FIG. 1A are respectively intended to implement corresponding procedures in the following method embodiments. For details, refer to descriptions in the following method embodiments. To avoid repetition, detailed descriptions are appropriately omitted herein.

It may be understood that the processor 110 in the electronic device shown in FIG. 1A may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. A memory may be further disposed in the processor 110, and is configured to store instructions and data. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory. This avoids repeated access and reduces waiting time of the processor 110, thereby improving efficiency of a system.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (derail clock line, SCL). In some embodiments, the processor 110 may include a plurality of groups of I2C buses. The processor 110 may be separately coupled to a touch sensor 180K, a charger, a flashlight, the camera 190, and the like through different I2C bus interfaces. For example, the processor 110 may be coupled to the touch sensor 180K through the I2C interface, so that the processor 110 and the touch sensor 180K can communicate with each other through the I2C bus interface, thereby implementing a touch function of the electronic device.

The I2S interface may be used for audio communication. In some embodiments, the processor 110 may include a plurality of groups of I2S buses. The processor 110 may be coupled to the audio circuit 180 through the I2S bus to implement communication between the processor 110 and the audio circuit 180. In some embodiments, the audio circuit 180 may transfer an audio signal to the transceiver 120 through the I2S interface, to implement a function of answering voice calls by using a Bluetooth headset.

The PCM interface may also be used for audio communication, to sample, quantize, and encode an analog signal. In some embodiments, the audio circuit 180 and the transceiver 120 may be coupled through a PCM bus interface. In some embodiments, the audio circuit 180 may alternatively transmit an audio signal to the transceiver 120 through the PCM interface, to implement a function of answering voice calls by using the Bluetooth headset. Both the I2S interface and the PCM interface may be used for audio communication.

The UART interface is a universal serial data bus for asynchronous communication. The bus may be a bidirectional communication bus. The bus converts to-be-transmitted data between serial communication and parallel communication. In some embodiments, the UART interface is usually used to connect the processor 110 to the transceiver 120. For example, the processor 110 communicates with a Bluetooth module in the transceiver 120 through the UART interface, to implement a Bluetooth function. In some embodiments, the audio circuit 180 may transfer an audio signal to the transceiver 120 through the UART interface, to implement a function of playing music by using a Bluetooth headset.

The MIPI interface may be used to connect the processor 110 to peripheral components such as the display unit 170 and the camera 190. The MIPI interface includes a camera serial interface (camera serial interface, CSI), a display serial interface (display serial interface, DSI), and the like. In some embodiments, the processor 110 communicates with the camera 190 through the CSI interface, to implement a photographing function of the electronic device. The processor 110 communicates with the display unit 170 through the DSI interface, to implement a display function of the electronic device.

The GPIO interface may be configured by using software. The GPIO interface may be configured as a control signal or may be configured as a data signal. In some embodiments, the GPIO interface may be used to connect the processor 110 to the camera 190, the display unit 170, the transceiver 120, the audio circuit 180, the sensor 101, and the like. The GPIO interface may alternatively be configured as an I2C interface, an I2S interface, a UART interface, an MIPI interface, or the like.

It may be understood that the interface connection relationship between the modules illustrated in this embodiment of this application is merely an example for description, and does not constitute a limitation on the structure of the electronic device. In some other embodiments of this application, the electronic device may alternatively use an interface connection manner different from that in the foregoing embodiment, or use a combination of a plurality of interface connection manners.

It may be understood that the power supply 150 shown in FIG. 1A is configured to supply power to the processor 110, the memory 130, the display unit 170, the camera 190, the input unit 160, the transceiver 120, and the like. The antenna 140 is configured to transmit and receive electromagnetic wave signals. Each antenna in the electronic device may be configured to cover one or more communication bands. Different antennas may be further multiplexed to increase antenna utilization. For example, the antenna 140 may be multiplexed as a diversity antenna of a wireless local area network. In some other embodiments, the antenna may be used in combination with a tuning switch.

The transceiver 120 may provide a solution for wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like applied to the electronic device. The transceiver 120 may be one or more components integrating at least one communication processing module. The transceiver 120 receives an electromagnetic wave through the antenna 140, performs frequency modulation and filtering processing on the electromagnetic wave signal, and sends a processed signal to the processor 110. The transceiver 120 may further receive a to-be-sent signal from the processor 110, perform frequency modulation and amplification on the signal, and convert the signal into an electromagnetic wave for radiation through the antenna 140.

In some embodiments, in the electronic device, the antenna 140 is coupled to the transceiver 120, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device implements a display function by using the GPU, the display unit 170, the application processor, and the like. The GPU is a microprocessor for image processing, and is connected to the display unit 170 and the application processor. The GPU is configured to perform mathematical and geometric calculation for graphics rendering. The processor 110 may include one or more GPUs that execute program instructions to generate or change display information.

The display unit 170 is configured to display an image, a video, and the like. The display unit 170 includes a display panel. The display panel may be a liquid crystal display (liquid crystal display, LCD), an organic light-emitting diode (organic light emitting diode, OLED), an active-matrix organic light emitting diode (active matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device may include 1 or N display units 170, where N is a positive integer greater than 1.

The electronic device may implement a photographing function by using the ISP, the camera 190, the video codec, the GPU, the display unit 170, the application processor, and the like.

The ISP is configured to process data fed back by the camera 190. For example, during video recording, the camera is opened, and light is transferred to a photosensitive element of the camera through a lens. An optical signal is converted into an electrical signal, and the photosensitive element of the camera transfers the electrical signal to the ISP for processing, to convert the electrical signal into an image visible to naked eyes. The ISP may further perform algorithm optimization on noise, brightness, and complexion of the image.

The ISP may further optimize parameters such as exposure and a color temperature of a photographing scene. In some embodiments, the ISP may be disposed in the camera 190. The camera 190 is configured to capture a still image or a video. An optical image is generated for an object through the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device may include 1 or N cameras 190, where N is a positive integer greater than 1. The digital signal processor is configured to process a digital signal, and may further process another digital signal in addition to the digital image signal. For example, when the electronic device performs frequency selection, the digital signal processor is configured to perform Fourier transform or the like on frequency energy.

The video codec is configured to compress or decompress a digital video. The electronic device can support one or more video codecs. In this way, the electronic device can play or record videos in a plurality of encoding formats, for example, moving picture experts group (moving picture experts group, MPEG) 1, MPEG2, MPEG3, and MPEG4.

The NPU is a neural-network (neural-network, NN) computing processor, quickly processes input information by referring to a biological neural network structure, for example, by referring to a transfer mode between human brain neurons, and may further continuously perform self-learning. Applications such as intelligent cognition of the electronic device, for example, image recognition, facial recognition, speech recognition, and text understanding, may be implemented by using the NPU.

The memory 130 may be configured to store computer-executable program code. The executable program code includes instructions. The memory 130 may include a program storage region and a data storage region. The program storage region may store an operating system, an application required by at least one function (for example, a sound playing function or an image playing function), and the like. The data storage region may store data (for example, audio data and a phone book) and the like created during use of the electronic device. In addition, the memory 130 may include a high-speed random access memory, and may further include a nonvolatile memory, for example, at least one magnetic disk storage device, a flash memory device, or a universal flash storage (universal flash storage, UFS). The processor 110 performs various function applications and data processing of the electronic device by running the instructions stored in the memory 130 and/or the instructions stored in the memory disposed in the processor.

The electronic device may implement an audio function, for example, music playing and sound recording, by using the audio circuit 180, the speaker 182, the microphone 184, the application processor, and the like.

The audio circuit 180 is configured to convert digital audio information into an analog audio signal for output, and is also configured to convert analog audio input into a digital audio signal. The audio circuit 180 may be further configured to encode and decode audio signals. In some embodiments, the audio circuit 180 may be disposed in the processor 110, or some functional modules of the audio circuit 180 may be disposed in the processor 110.

The speaker 182, also referred to as a "horn", is configured to convert an audio signal into a sound signal. The electronic device may be used to listen to music or answer a hands-free call by using the speaker 182.

The microphone 184, also referred to as a "mic" or a "mike", is configured to convert a sound signal into an electrical signal. When making a call or sending a voice message, a user may input a sound signal into the microphone 184 by making a sound near the microphone 184. At least one microphone 184 may be disposed in the electronic device. In some other embodiments, two microphones 184 may be disposed in the electronic device, to implement a noise reduction function in addition to sound signal collection. In some other embodiments, three, four, or more microphones 184 may alternatively be disposed in the electronic device, to implement sound signal collection and noise reduction, and further identify a sound source and implement a directional sound recording function and the like.

The electronic device such as a mobile phone, a tablet computer, or an in-vehicle computer usually supports three types of audio channels: a Bluetooth call audio channel, a Bluetooth media audio channel, and an electronic device audio channel (a speaker-mode playing audio channel and a receiver audio channel). The electronic device may establish, by using Bluetooth, a connection to a Bluetooth device, for example, a Bluetooth headset or an in-vehicle audio system, that has an audio playing capability. After the electronic device is successfully connected to the Bluetooth device, an application running on the electronic device may send, through the Bluetooth audio channel, audio data to the Bluetooth device for playing.

Refer to FIG. 1B. FIG. 1B is a schematic diagram of distribution of a sound signal when a user uses an electronic device audio channel in a conventional technology according to an embodiment of this application. For ease of description, the following provides descriptions by using an example in which an electronic device is a mobile phone. A principle remains the same when the electronic device is another device such as a tablet computer or a smartwatch having a call function, and therefore, is not described again. Refer to FIG. 1B. Because an area of a region occupied by a screen of a mobile phone is becoming larger, a sound emitting unit, for example, a ceramic component 183, of the mobile phone is designed inside the screen. In this specification, this type of sound emitting unit is referred to as a component that pushes the screen to emit a sound. Because of a material characteristic of the component that pushes the screen to emit a sound, bands of sound signals (Voice 1) emitted by the component when the component pushes the screen to emit a sound are mainly a middle band and a high band, but the sound signals are relatively weak in a low band. Consequently, in a scenario in which there is a relatively large quantity of low-band sound signals, for example, a call scenario, sound quality of Voice1 heard by the user is relatively low. Therefore, a low-band sound signal (Voice2) is emitted at a top of the mobile phone by using a speaker 182. In a process in which the user holds the mobile phone for a call, a screen position at which the ceramic component 183 is located cannot closely fit with an ear of the user. Therefore, a part of Voice2 emitted by the ceramic component 183 leaks out of the ear, leading to privacy leakage during the user call. The middle band is a band whose lower limit is greater than a first threshold and whose upper limit is less than a second threshold. The low band is a band whose upper limit is less than a third threshold. The high band in the following descriptions is a band whose lower limit is greater than a fourth threshold. The third threshold is less than the first threshold, and the fourth threshold is greater than the second threshold.

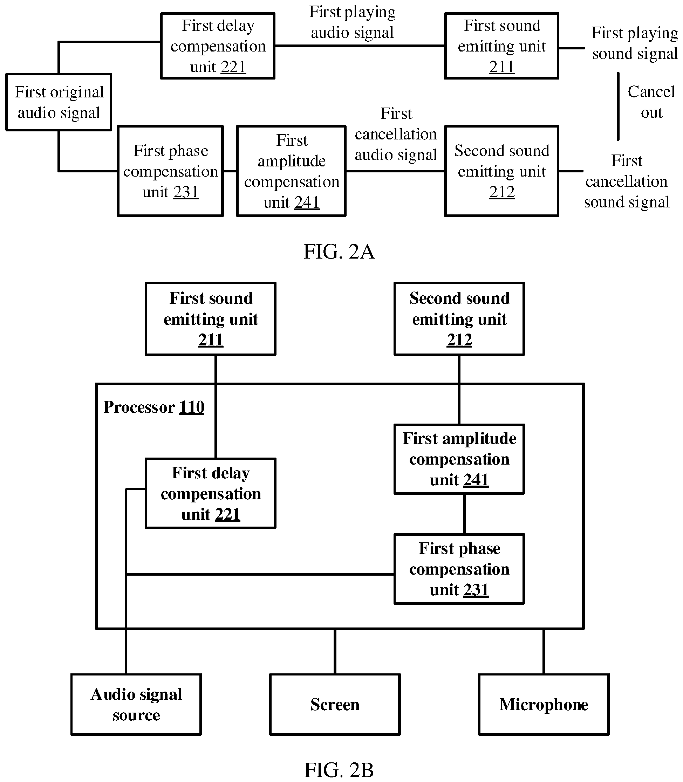

In view of the foregoing descriptions, this application provides an electronic device and a parameter determining method for an electronic device for the electronic device. To more clearly describe the parameter determining method for an electronic device provided in this application, the following first describes the electronic device provided in this application. Refer to FIG. 2A. FIG. 2A is a schematic diagram of structural composition of an electronic device according to this application. The electronic device includes:

a first sound emitting unit 211, a second sound emitting unit 212, a first delay compensation unit 221, a first phase compensation unit 231, and a first amplitude compensation unit 241.

The first delay compensation unit 221 is configured to adjust, based on a first delay compensation function, a delay of a first original audio signal to be played by the first sound emitting unit, to obtain a first playing audio signal. The first playing audio signal is an audio signal to be played by the first sound emitting unit.

The first sound emitting unit 211 is configured to emit a first playing sound signal based on the first playing audio signal.

The first phase compensation unit 231 and the first amplitude compensation unit 241 are configured to adjust a phase and an amplitude of the first original audio signal based on a first phase compensation function and a first amplitude compensation function, to obtain a first cancellation audio signal.

The second sound emitting unit 212 is configured to emit a first cancellation sound signal based on the first cancellation audio signal.

The first sound emitting unit 211 and the second sound emitting unit 212 are two different sound emitting units on the electronic device, and the generation unit is any circuit unit that can convert an audio signal into a sound signal. For example, in an example in which the electronic device is a mobile phone that includes a component that pushes a screen to emit a sound and a top speaker, the first sound emitting unit 211 is one of the component that pushes the screen to emit a sound and the top speaker, and the second sound emitting unit 212 is the other one of the component that pushes the screen to emit a sound and the top speaker.

The first phase compensation unit 231 is configured to adjust a phase of an input audio signal based on the first phase compensation function, and the first amplitude compensation unit 241 is configured to adjust an amplitude of the input audio signal based on the first amplitude compensation function. In addition, in a possible embodiment, input of the first phase compensation unit 231 is the first original audio signal, and input of the first amplitude compensation unit 241 is output of the first phase compensation unit 231. In this example, output of the first amplitude compensation unit 241 is the first cancellation sound signal. In another possible embodiment, input of the first amplitude compensation unit 241 is the first original audio signal, and input of the first phase compensation unit 231 is output of the first amplitude compensation unit 241. In this example, output of the first phase compensation unit 231 is the first cancellation sound signal.

The first delay compensation unit 221 may be implemented by using a filter, or may be implemented by using another circuit unit having a delay compensation function. In other words, the first delay compensation unit 221 may be any circuit unit that can adjust a delay of an audio signal.

In addition, the first phase compensation unit 231 may be implemented by using a filter. Specifically, the first phase compensation unit 231 may be implemented through cascading of IIR filters, or may be implemented by another circuit unit having a phase compensation function. In addition, the first amplitude compensation unit 241 may be implemented by using a filter, or may be implemented by another circuit unit having an amplitude compensation function. In other words, the first amplitude compensation unit 241 may be any circuit unit that can adjust a phase of an audio signal.

In addition, the first delay compensation unit 221, the first phase compensation unit 231, and the first amplitude compensation unit 241 may be circuit units independent of a processor of the electronic device, or may be virtual units virtualized by a processor of the electronic device. For example, for the case in which the first delay compensation unit 221, the first phase compensation unit 231, and the first amplitude compensation unit 241 are virtual units virtualized by the processor of the electronic device, structural distribution of the electronic device provided in this application is shown in FIG. 2B. The same applies to a second delay compensation unit, a second phase compensation unit, a third phase compensation unit, a second amplitude compensation unit, and a third amplitude compensation unit in the following descriptions. Therefore, details are not described again below.

In this embodiment, the first delay compensation function is used to adjust a delay of a sound signal, to be specific, adjust, by processing the first original audio signal, a delay of the first playing sound signal output by the first sound emitting unit 211. Therefore, the first playing audio signal and the first original audio signal have different delays but have a same frequency.

The first phase compensation function is used to adjust a phase of a sound signal while keeping an amplitude of the sound signal unchanged, to be specific, adjust a phase of the first cancellation sound signal by affecting a phase of the first cancellation audio signal. The first amplitude compensation function is used to adjust an amplitude of a sound signal, to be specific, adjust an amplitude of the first cancellation sound signal by affecting an amplitude of the first cancellation audio signal. Affected by the first phase compensation function and the first amplitude compensation function, the first cancellation audio signal has a different phase and amplitude from the first original audio signal but has a same frequency as the first original audio signal. In addition, because of the action of the first phase compensation function and the first amplitude compensation function, a delay of the obtained first cancellation audio signal is also different from that of the first original audio signal.

Therefore, theoretically, using a proper first delay compensation function can enable the first playing audio signal and the first cancellation audio signal to have a same frequency and delay but have different phases and amplitudes. Therefore, the first playing sound signal emitted based on the first playing audio signal and the first cancellation sound signal emitted based on the first cancellation audio signal are two coherent sound signals. It can be learned from an acoustic principle that if at a spatial point, two coherent sound signals have opposite phases but have close amplitudes or a same amplitude, sound intensity of a superimposed sound signal formed by superimposing the two coherent sound signals at the spatial point is relatively low or even is 0. This phenomenon is referred to as cancellation in this specification. Therefore, using a proper first phase compensation function and first amplitude compensation function can enable the first cancellation sound signal to cancel out the first playing sound signal.

It can be learned that if a proper first delay compensation function, first phase compensation function, and first amplitude compensation function can be determined, the electronic device can cancel out, by using the first cancellation sound signal emitted by the second sound emitting unit 212, the first playing sound signal emitted by the first sound emitting unit 211, so that leakage of the first playing sound signal is effectively reduced.

The first delay compensation function, the first phase compensation function, and the first amplitude compensation function that are used by the electronic device are determined by using the sound method provided in this application. In addition, the electronic device may perform the parameter determining method for an electronic device to determine the three compensation functions, or another device may perform the parameter determining method for an electronic device to determine the three compensation functions. This is not limited in this application.

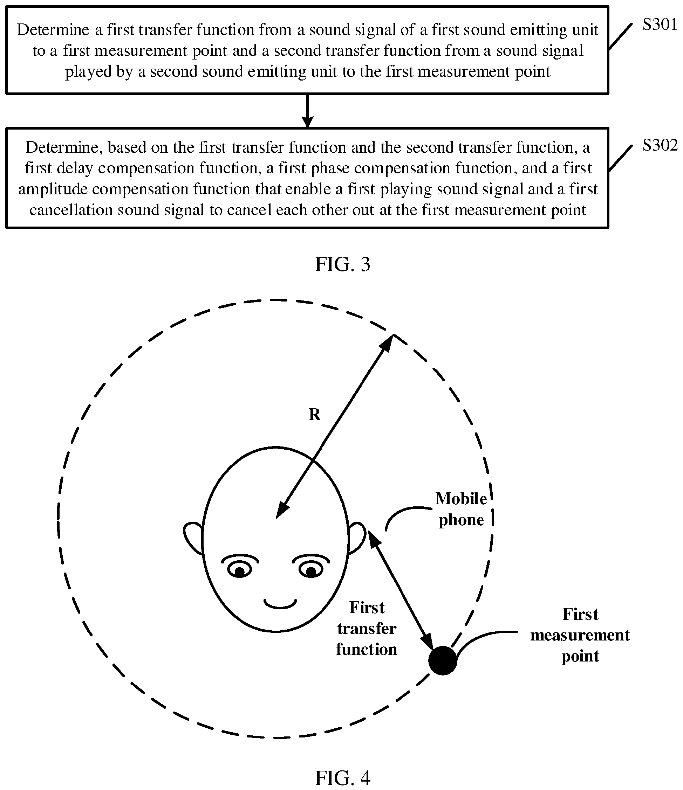

A parameter determining method for an electronic device provided in this application is shown in FIG. 3, and includes the following steps.

S301: Determine a first transfer function from a sound signal of a first sound emitting unit to a first measurement point and a second transfer function from a sound signal played by a second sound emitting unit to the first measurement point.

S302: Determine, based on the first transfer function and the second transfer function, a first delay compensation function, a first phase compensation function, and a first amplitude compensation function that enable a first playing sound signal and a first cancellation sound signal to cancel each other out at the first measurement point.

In S301, the first measurement point is a measurement point located outside the electronic device. The first measurement point may be set based on experience of a person skilled in the art. For example, a position at which leaked call sounds of the electronic device are often heard around the electronic device is used as the first measurement point. The first measurement point may alternatively be set based on an actual requirement. To make it difficult for a person at a distance of one unit length from the electronic device to hear a leaked call sound of the electronic device, the first measurement point may be set at a distance of one unit length from the electronic device. In addition, there may be one or more first measurement points. In the case of a plurality of first measurement points, in an example in which the electronic device is a mobile phone, the plurality of first measurement points may be evenly or unevenly distributed on a circumference of a horizontal plane at a distance of a radius R1 from a user who holds the mobile phone for a call. In addition, the plurality of first measurement points may alternatively be distributed on a plurality of horizontal planes at different distances from the user who holds the mobile phone for a call. In addition, the plurality of first measurement points may alternatively be distributed on a sphere with a radius R2 centered on the user who holds the mobile phone for a call. In addition, the first measurement point may alternatively be evenly or unevenly distributed in space of interest of any regular or irregular shape. R1 and R2 are preset values that are set based on experience and/or an actual requirement.

The first sound emitting unit converts an audio signal (for example, a digital signal transmitted in the electronic device) that needs to be played into a sound signal (namely, an analog signal) for emission. It may be understood that the audio signal is a signal transferred inside the electronic device, and the sound signal is a signal emitted by the electronic device. The first transfer function in this specification is a conversion relationship between the audio signal and a signal formed by the sound signal at the first measurement point. If the audio signal is denoted as z, and the signal formed by the sound signal at the first measurement point is denoted as y, the first transfer function is a conversion relationship between z and y. Similarly, the second transfer function in this specification is a conversion relationship between an audio signal that needs to be played by the second sound emitting unit and a signal formed, at the second measurement point, by a sound signal emitted by the second sound emitting unit. For ease of description, in the following descriptions, the first transfer function is $H1(z)$, and the second transfer function is denoted as $H2(z)$.

It may be understood that although the first sound emitting unit and the second sound emitting unit are located on the same electronic device, positions of the first sound emitting unit and the second sound emitting unit on the electronic device (for example, the ceramic component 183 and the speaker 182 in FIG. 1B) are different. Therefore, sound propagation paths and distances of reaching the first measurement point by the sound signals emitted by the first sound emitting unit and the second sound emitting unit are different, and therefore, $H1(z)$ and $H2(z)$ are different.

In the case in which only one measurement point exists, for a method for determining $H1(z)$, refer to FIG. 4 in which the electronic device is installed on a human head model, so that a sound emitting region of the first sound emitting unit faces an ear of the human head model, to simulate a posture of holding the electronic device by the user for a call. A microphone or another audio receiving apparatus may be installed at the first measurement point, and a distance between the first measurement point and the human head model is R. An excitation signal is input into the first sound emitting unit of the electronic device as an audio signal that needs to be played by the first sound emitting unit, so that the first sound emitting unit emits a sound signal, and measures a sound signal received by the microphone at the first measurement point. In this case, a conversion relationship between the excitation signal and the sound signal is calculated as H1(z). It may be understood that H1(z) reflects a material characteristic of the first sound emitting unit and an effect characteristic of a propagation path from the first sound emitting unit to the first measurement point.

In the case in which a plurality of first measurement points exist, a conversion relationship between an excitation signal and a sound signal received at each first measurement point may be calculated based on the sound signal according to the foregoing method for determining H1(z) at one first measurement point. Weighted summation is performed all conversion relationships to obtain H1(z). Weights of the conversion relationships in the weighted summation process may be set based on experience of a person skilled in the art or a requirement. This is not limited in this application. For example, it is assumed that there are a total of three first measurement points, and the three conversion relationships respectively calculated based on sound signals received at the three first measurement points are denoted as H11(z), H12(z), and H13(z). In this example, the first transfer function H1(z)=A1 H11(z)+A2 H12(z)+A3 H13(z), where A1, A2, and A3 are preset weights.

A method for determining H2(z) is similar to the method for determining H1(z). A difference lies in that, during H2(z) measurement, an excitation signal is input into the second sound emitting unit, and a magnitude of a sound signal of the second sound emitting unit is collected at the first measurement point by using the microphone. For details, refer to the foregoing descriptions of the method for determining H1(z). Details are not described herein again.

In S302, to determine the first delay compensation function, the first phase compensation function, and the first amplitude compensation function, a drive signal channel and a power amplifier model K1(z) that correspond to the first sound emitting unit and a drive signal channel and a power amplifier model K2(z) that correspond to the second sound emitting unit may be first determined. An input signal may be applied to K1(z), an output signal with which K1(z) responds to the input signal may be collected, and K1(z) may be calculated based on the input signal and the output signal. Similarly, an input signal may be applied to K2(z), an output signal with which K2(z) responds to the input signal may be collected, and K2(z) may be calculated based on the input signal and the output signal. In addition, for ease of description, the first delay compensation function is denoted as D1(z), the first phase compensation function is denoted as G1(z), and the first amplitude compensation function is denoted as G2(z). In this case, a signal formed by the first playing sound signal at the first measurement point is D1(z)K1(z)H1(z), and a signal formed by the first cancellation sound signal at the first measurement point is G1(z)G2(z)K2(z)H2(z).

It may be understood that if a first original audio signal is denoted as X, the first playing sound signal is D1(z)X obtained after a delay of the first original audio signal X is adjusted by using D1(z), K1(z)D1(z)X is obtained under the action of K1(z) of the first sound emitting unit, and K1(z)D1(z)X is transferred to the first measurement point by using H1(z) to form a sound signal H1(z)K1(z)D1(z)X. The first cancellation sound signal is G1(z)G2(z)X obtained by adjusting an amplitude and a phase of the first original audio signal X by using G1(z)G2(z), K2(z)G1(z)G2(z)X is obtained under the action of K2(z) of the second sound emitting unit for a first cancellation audio signal, and K2(z)G1(z)G2(z)X is transferred to the first measurement point by using H2(z) to form a sound signal H2(z)K2(z)G1(z)G2(z)X. Therefore, a superimposed sound signal formed through superimposition of the first playing sound signal and the first cancellation sound signal at the first measurement point is D1(z)K1(z)H 1 (z)X+G 1 (z)G2(z)K2(z)H2(z)X.

To enable the first playing sound signal and the first cancellation sound signal to cancel each other out at the first measurement point, sound intensity of the superimposed sound signal needs to be relatively low, in other words, a formula (1) needs to be met:

$$|D1(z)K1(z)H1(z)X+G1(z)G2(z)K2(z)H2(z)X|=g \quad (1),$$

where

g is a preset target value, and g is greater than or equal to 0, and is less than a preset sound intensity threshold. The sound intensity threshold may be set based on an actual requirement or experience, but a sound signal whose intensity is less than the sound intensity threshold should be made as difficult as possible for a person to clearly hear. For ease of description, the following uses g=0 as an example for description. A principle remains the same when g is unequal to =, and is not described herein again. When g=0, the formula (1) may be rewritten as a formula (2):

$$D1(z)K1(z)H1(z)=-G1(z)G2(z)K2(z)H2(z) \quad (2)$$

In the foregoing formula, K1(z), H1(z), K2(z), and H2(z) are all determined. Therefore, D1(z), G1(z), and G2(z) that enable the formula (1) or (2) to hold true may be determined. As analyzed above, using the determined D1(z), G1(z), and G2(z) can enable the first playing sound signal and the first cancellation sound signal to cancel each other out at the

EP 4 478 694 A1

first measurement point. Specific values of D1(z), G1(z), and G2(z) are not limited in this application. In addition, for ease of calculation, in addition to the foregoing formula (1) or formula (2), another constraint, for example, a constraint that a delay of D1(z) is the same as a sum of delays of G1(z) and G2(z), may be added.

In this embodiment, the first transfer function and the second transfer function from sound signals of the first sound emitting unit and the second sound emitting unit to the first measurement point are first determined, and then the first delay compensation function, the first phase compensation function, and the first amplitude compensation function that enable the first playing sound signal and the first cancellation sound signal to cancel each other out at the first measurement point are determined based on the first transfer function and the second transfer function, so that the first playing sound signal emitted by the first sound emitting unit after the delay of the first original sound signal is adjusted by using the first delay compensation function of a first delay compensation unit and the first cancellation sound signal emitted by the second sound emitting unit after the phase and the amplitude of the first original sound signal are adjusted by using the first phase compensation function and the second amplitude compensation function of a first phase compensation unit and a first amplitude compensation unit cancel each other out at the first measurement point. Therefore, sound leakage during a user call is canceled out at the first measurement point, so that privacy leakage during the user call is avoided.

It may be understood that in a process in which the electronic device plays an audio signal, the second sound emitting unit may be configured to emit only the first cancellation sound signal, and may also be configured to emit another sound signal.

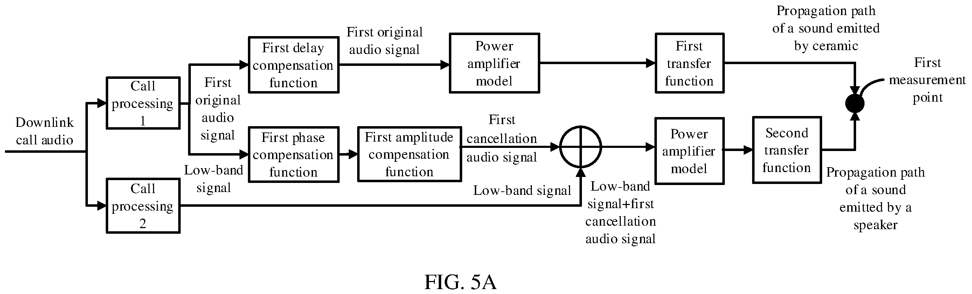

For example, in a possible embodiment, the first sound emitting unit is the ceramic component 183 in FIG. 1B, and the second sound emitting unit is the speaker 182 in FIG. 1B. As described above, because Voice1 emitted by the ceramic component 183 is relatively weak in a low band, a low-band sound signal is emitted by using the speaker 182, so that sound quality during a user call is improved. In other words, in this example, the second sound emitting unit is configured to emit a low-band sound signal in addition to the first cancellation sound signal. In this example, the first original audio signal is Voice1. Refer to FIG. 5A. FIG. 5A is a block diagram of a system of the electronic device in this example. Voice1 forms the first playing sound signal under the action of D1(z), K1(z), and H1(z), and the first playing sound signal is transferred to the first measurement point. In addition, Voice1 forms the first cancellation audio signal Voice1_R under the action of G1(z) and G2(z), Voice1_R and Voice2 form the first cancellation sound signal and a low-band sound signal under the action of K2(z) and H2(z), and the first cancellation sound signal and the low-band sound signal are transferred to the first measurement point. The first playing sound signal and the first cancellation sound signal cancel each other out at the first measurement point, so that leakage of Voice1 is reduced.

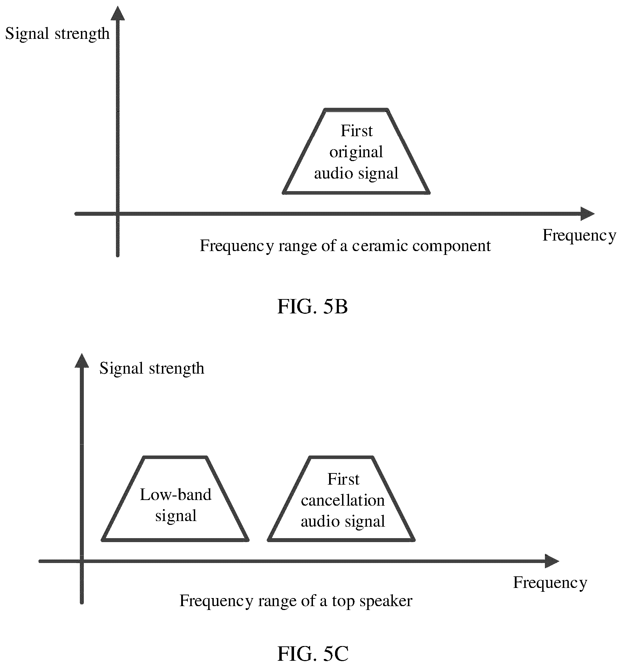

In this example, as shown in FIG. 5B, Voice1 is a sound signal that needs to be played by the ceramic component 183. Therefore, as analyzed above, frequency distribution of Voice1 is shown in FIG. 5B, to be specific, Voice1 is an audio signal of a middle band or a high band. Frequency distribution of Voice2 and Voice1_R is shown in FIG. 5C. As shown in the figure, a low-band signal is Voice2, and the first cancellation audio signal is Voice1_R. It can be learned that Voice2 is a low-band audio signal, and bands of Voice1_R and Voice1 should be completely the same or partially overlap. In addition, to enable Voice1_R to cancel out Voice1 as much as possible, the bands of Voice1_R and Voice1 should be the same as completely as possible.

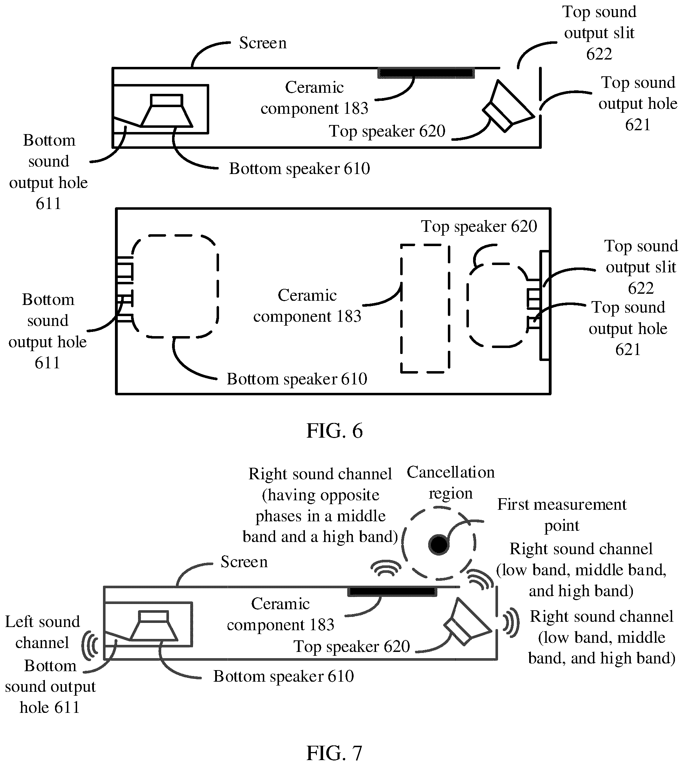

In another possible embodiment, the first sound emitting unit is a speaker, and the second sound emitting unit is a component, for example, a ceramic component, that pushes a screen to emit a sound. For example, the electronic device is still a mobile phone. Refer to FIG. 6. FIG. 6 is a schematic diagram of a structure, in the mobile phone, of a top speaker, a bottom speaker, and a component that pushes a screen to emit a sound shown in this application. The mobile phone includes a bottom speaker 610, a top speaker 620, and a ceramic component 183. The top speaker includes a top sound output hole 621 and a top sound output slit 622. The bottom speaker 610 includes a bottom sound output hole 611. When the mobile phone plays a sound in a speaker mode, for example, plays a movie, a sound signal is emitted by jointly using the bottom speaker 610 and the top speaker 620 of the mobile phone. In a process of emitting a sound signal, the top speaker 620 of the mobile phone emits a sound through each of the top sound output hole 621 of the mobile phone and the top sound output slit 622 of the mobile phone. However, in a process of emitting a sound signal, the top speaker 610 at the bottom emits a sound only through the bottom sound output hole 611. Therefore, sound output structures of the top speaker 620 and the bottom speaker 610 of the mobile phone are asymmetric, and as a result, auditory perception of a sound of the user when the user watches a movie by using the mobile phone is asymmetric.

On this basis, in this example, the first playing sound signal emitted by the top sound output slit in the top speaker 620 is canceled out at the first measurement point by using the first cancellation sound signal emitted by the ceramic component 183, so that auditory perception of the sound when the user watches the movie by using the mobile phone is more symmetrical.

As shown in FIG. 6, the top sound output slit 622 is located between the ceramic component 183 and the top sound output hole 621, and a sound emitted by the top sound output slit 622 is emitted toward a side close to a screen of the mobile phone. Therefore, in this example, to enable the first cancellation sound signal emitted by the ceramic component 183 to effectively cancel out the first playing sound signal emitted by the top sound output slit 622, a principle of canceling out, at the first measurement point, an audio signal played by the mobile phone in this example is the same as a principle of canceling out Voice1 in FIG. 5A. A difference lies only in that in this example, a canceled sound signal is a sound signal emitted by the top speaker 620 through the top sound output slit 622.

In this example, the first measurement point may be set at any position. For example, in a possible embodiment, the first measurement point may be set at a position at which an ear is located when the user watches a movie by using the mobile phone. In another possible embodiment, the first measurement point may alternatively be set between the top speaker and the component that pushes the screen to emit a sound, and be located on a side close to the screen of the electronic device. To be specific, as shown in FIG. 7, it may be understood that in this example, the first measurement point may be one or more measurement points that are located between the ceramic component 183 and the top speaker 620 and that are located in a region on the side close to the screen of the electronic device. A sound signal emitted by the top speaker 620 through the top sound output hole 621 has spread to a top region of the mobile phone, and the first measurement point in a cancellation region between the ceramic component 183 and the top speaker 620 can barely obtain, through measurement, the sound signal emitted by the top speaker 620. Therefore, a sound signal obtained by the first measurement point in the region through measurement mainly includes a sound signal emitted by the top speaker 620 through the top sound output slit 622, and further, a transfer function determined based on the sound signal is also a transfer function from the top sound output slit 622 to the first measurement point. Therefore, a first delay compensation function, a first phase compensation function, and a first amplitude compensation function that are determined based on the transfer function are also compensation functions for the sound signal emitted by the top sound output slit 622. Further, each compensation unit adjusts, by using a corresponding compensation function, the first cancellation sound signal emitted by the ceramic component 183 and the first playing sound signal emitted by the top sound output slit 622, so that the first cancellation sound signal can cancel out the first playing sound signal.

In addition, a person skilled in the art may understand that the ceramic component 183 usually tends to emit sound signals in a middle band and a high band because of a material characteristic of the ceramic component 183, and therefore, in this example, the first cancellation sound signal emitted by the ceramic component 183 is used to cancel out a signal that is located in the middle band or the high band and that is in the sound signal emitted by the top speaker 620. In other words, in this example, the first playing sound signal and the first cancellation sound signal are in the middle band or the high band. Because a person has low sensitivity to a low-band sound signal, even if a part of a low-band sound signal emitted by the top speaker is not canceled out at the first measurement point, no sound asymmetry is caused to auditory perception of the user.

Therefore, in this embodiment, in a speaker-mode playing scenario of the electronic device, the first cancellation sound signal may be emitted by using the component that pushes the screen to emit a sound to cancel out the first playing sound signal that is emitted by the top sound output slit of the top speaker and that is asymmetric to that of the bottom speaker, so that sound quality of speaker-mode playing is improved.

In another possible embodiment, alternatively, the first cancellation sound signal emitted by the ceramic component 183 may be used to cancel out a signal that is located in the middle band and that is in the sound signal emitted by the top speaker 620, but not cancel out a signal that is located in the high band and that is in the sound signal emitted by the top speaker 620. In still another possible embodiment, alternatively, the first cancellation sound signal emitted by the ceramic component 183 may be used to cancel out a signal that is located in the high band and that is in the sound signal emitted by the top speaker 620, but not cancel out a signal that is located in the middle band and that is in the sound signal emitted by the top speaker 620.

In the foregoing examples, the electronic device cancels out the first playing sound signal by using the first cancellation sound signal emitted by the second sound emitting unit, to reduce leakage of the sound signal emitted by the first sound emitting unit. In some application scenarios, in addition to leakage of the sound signal emitted by the first sound emitting unit, leakage of a sound signal emitted by the second sound emitting unit needs to be reduced.

For example, the electronic device is still a mobile phone, the first sound emitting unit is a component that is of the mobile phone and that pushes a screen to emit a sound, and the second sound emitting unit is a top speaker of the mobile phone. In some application scenarios, to enhance strength of a high-band signal in a call sound, the mobile phone emits the high-band signal in the call sound by using the top speaker during a call. In these application scenarios, leakage of the high-band signal emitted by the top speaker further needs to be reduced.

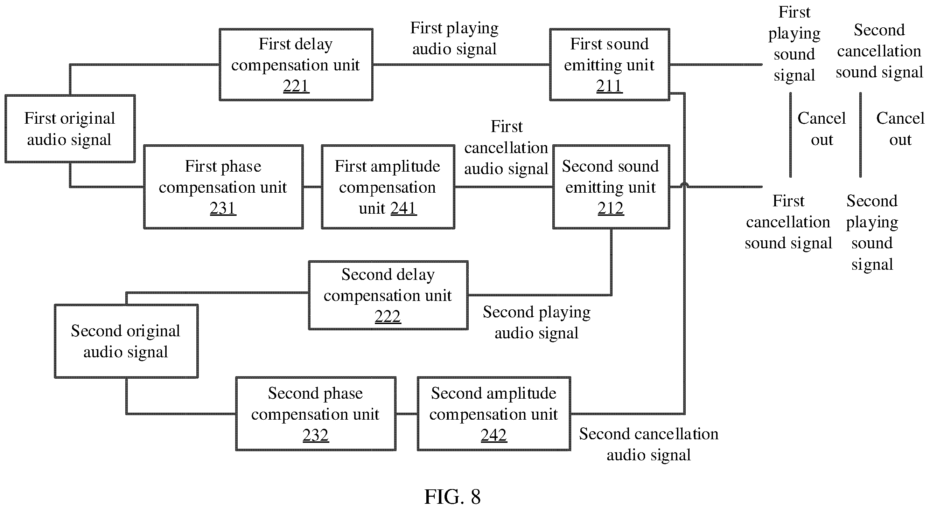

On this basis, in a possible embodiment, as shown in FIG. 8, the electronic device further includes a second delay unit 222, a second phase compensation unit 232, and a second amplitude compensation unit 242.

The second delay compensation unit 222 is configured to adjust, based on a second delay compensation function, a delay of a second original audio signal to be played by the second sound emitting unit, to obtain a second playing audio signal.

The second sound emitting unit 212 is further configured to emit a second playing sound signal based on the second playing audio signal.

The second phase compensation unit 232 and the second amplitude compensation unit 242 are configured to adjust a phase and an amplitude of the second original audio signal based on a second phase compensation function and a second amplitude compensation function, to obtain a second cancellation audio signal.

The first sound emitting unit 211 is further configured to emit a second cancellation sound signal based on the second cancellation audio signal.

The second phase compensation unit 232 is configured to adjust a phase of an input audio signal based on the second phase compensation function, and the second amplitude compensation unit 242 is configured to adjust an amplitude of the input audio signal based on the second amplitude compensation function. In addition, in a possible embodiment, input of the second phase compensation unit 232 is the second original audio signal, and input of the second amplitude compensation unit 242 is output of the second phase compensation unit 232. In this example, output of the second amplitude compensation unit 242 is the second cancellation sound signal. In another possible embodiment, input of the second amplitude compensation unit 242 is the second original audio signal, and input of the second phase compensation unit 232 is output of the second amplitude compensation unit 242. In this example, output of the second phase compensation unit 232 is the second cancellation sound signal.

As described in the foregoing related descriptions in FIG. 2A, in this embodiment, when a proper second delay compensation function, second phase compensation function, and second amplitude compensation function are used, the second cancellation sound signal emitted by the first sound emitting unit 211 can cancel out the second playing sound signal emitted by the second sound emitting unit 212, so that leakage of the sound signal emitted by the second sound emitting unit 212 is reduced.

The second delay compensation function, the second phase compensation function, and the second amplitude compensation function that are used by the electronic device are determined by using the sound method provided in this application. In addition, the electronic device may perform the parameter determining method for an electronic device to determine the three compensation functions, or another device may perform the parameter determining method for an electronic device to determine the three compensation functions. This is not limited in this application.

Similar to the method for determining the first delay compensation function, the first phase compensation function, and the first amplitude compensation function, in this application, the second delay compensation function, the second phase compensation function, and the second amplitude compensation function that enable the second playing sound signal and the second cancellation sound signal to cancel each other out at the first measurement point are determined based on the first transfer function and the second transfer function.

For ease of description, in the following descriptions, the second delay compensation function is denoted as $D2(z)$, the second phase compensation function is denoted as $G3(z)$, and the second amplitude compensation function is denoted as $G4(z)$. It may be understood that if the second original audio signal is denoted as $Y$, the second playing sound signal is $D2(z)Y$ obtained after the delay of the second original audio signal $Y$ is adjusted by using $D2(z)$, $K2(z)D2(z)Y$ is obtained under the action of $K2(z)$ of the second sound emitting unit, and $K2(z)D2(z)Y$ is transferred to the first measurement point by using $H2(z)$ to form a sound signal $H2(z)K2(z)D2(z)Y$. The second cancellation sound signal is $G3(z)G4(z)Y$ obtained by adjusting the amplitude and the phase of the second original audio signal $Y$ by using $G3(z)G4(z)$, $K1(z)G3(z)G4(z)Y$ is obtained under the action of $K1(z)$ of the first sound emitting unit for the second cancellation audio signal, and $K1(z)G3(z)G4(z)Y$ is transferred to the first measurement point to form a sound signal $H1(z)K1(z)G3(z)G4(z)Y$. Therefore, a superimposed sound signal formed through superimposition of the second playing sound signal and the second cancellation sound signal at the first measurement point is $D2(z)K2(z)H2(z)Y+G3(z)G4(z)K1(z)H1(z)Y$.

To enable the second playing sound signal and the second cancellation sound signal to cancel each other out at the first measurement point, sound intensity of the superimposed sound signal needs to be relatively low, in other words, a formula (3) needs to be met:

$$|D2(z)K2(z)H2(z)Y+G3(z)G4(z)K1(z)H1(z)Y|=g \quad (3)$$

When g=0, the formula (3) may be rewritten as a formula (4):

$$D2(z)K2(z)H2(z)=-G3(z)G4(z)K1(z)H1(z) \quad (4)$$

In the foregoing formula, $K1(z)$, $H1(z)$, $K2(z)$, and $H2(z)$ are all determined. Therefore, $D2(z)$, $G3(z)$, and $G4(z)$ that enable the formula (3) or (4) to hold true may be determined. As analyzed above, using the determined $D2(z)$, $G3(z)$, and $G4(z)$ can enable the second playing sound signal and the second cancellation sound signal to cancel each other out at the first measurement point. Specific values of $D2(z)$, $G3(z)$, and $G4(z)$ are not limited in this application. In addition, for ease of calculation, in addition to the foregoing formula (3) or formula (4), another constraint, for example, a constraint that a delay of $D2(z)$ is the same as a sum of delays of $G3(z)$ and $G4(z)$, may be added.

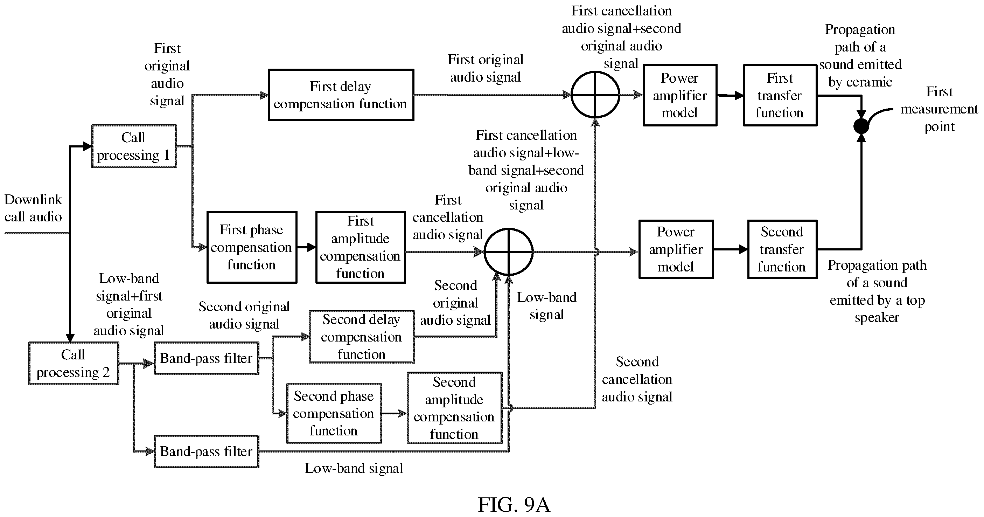

To more clearly describe the foregoing embodiment of reducing leakage of the sound signal emitted by the second sound emitting unit, the following provides descriptions by using an example in which the first sound emitting unit is a ceramic component and the second sound emitting unit is a top speaker. Refer to FIG. 9A. In this example, the first original audio signal is Voice1, the second original audio signal is Voice3, namely, a high-band signal in a call sound, and Voice2 is a low-band signal in the call sound.

The second playing audio signal, Voice2, and Voice1_R form the second playing sound signal, a low-band sound signal, and the first cancellation sound signal under the action of K2(z) and H2(z), and the second playing sound signal, the low-band sound signal, and the first cancellation sound signal are transferred to the first measurement point.

In addition, Voice3 forms the second cancellation audio signal Voice3_R under the action of G3(z) and G4(z). Voice3_R and the first playing audio signal form the second cancellation sound signal and the first playing sound signal under the action of K1(z) and H1(z), and the second cancellation sound signal and the first playing sound signal are transferred to the first measurement point. The first playing sound signal and the first cancellation sound signal cancel each other out at the first measurement point, and the second playing signal and the second cancellation signal also cancel each other out at the first measurement point, so that leakage of Voice1 and Voice3 is reduced.

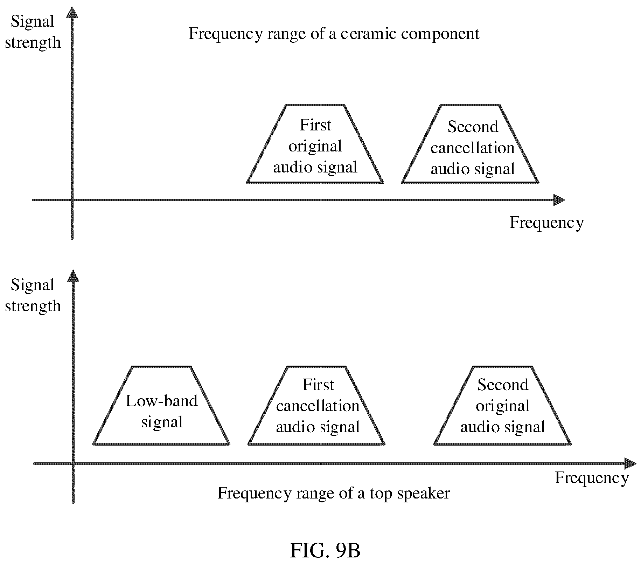

In this example, as described above, Voice3 is a high-band audio signal, and bands of Voice3_R and Voice3 should be completely the same or partially overlap. To enable Voice3_R to cancel out Voice3 as much as possible, the bands of Voice3_R and Voice3 should be the same as completely as possible. Therefore, a spectrum of each audio signal in this example is shown in FIG. 9B.

As described above, using proper compensation functions is a precondition for reducing leakage of a sound signal. Therefore, whether the determined compensation functions are accurate directly affects whether leakage of the sound signal can be successfully reduced. Limited by various conditions, for example, performance and calculation accuracy of a microphone used to collect a sound signal at a measurement point, the determined compensation function may not be accurate enough. On this basis, this application provides a method for adaptively adjusting a compensation function. The method may be used to adaptively adjust any one or more of the foregoing compensation functions. For example, the method may be used to adaptively adjust one or more of the foregoing first delay compensation function, first phase compensation function, and first amplitude compensation function, and may also be used to adaptively adjust one or more of the foregoing second delay compensation function, second phase compensation function, and second amplitude compensation function.

For ease of description, the following mainly describes a case in which one or more of the foregoing first delay compensation function, first phase compensation function, and first amplitude compensation function are adaptively adjusted. A principle remains the same when another function is adjusted. Therefore, only a difference is briefly described.

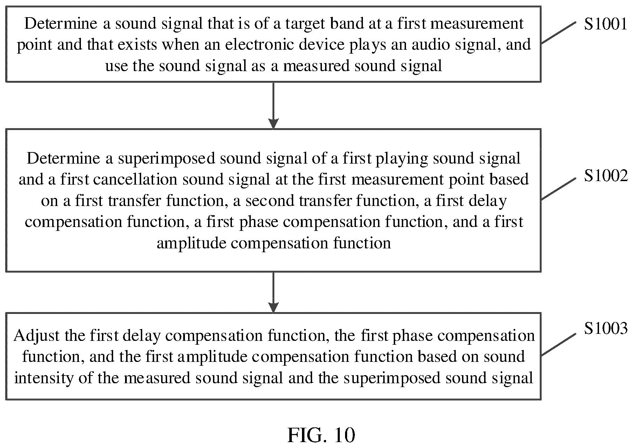

Refer to FIG. 10. The method for adaptively adjusting a compensation function provided in this application includes the following steps.

S1001: Determine a sound signal that is of a target band at the first measurement point and that exists when the electronic device plays an audio signal, and use the sound signal as a measured sound signal.

When one or more of the foregoing first delay compensation function, first phase compensation function, and first amplitude compensation function are adaptively adjusted, the target band is a band in which the first original audio signal is located. When one or more of the foregoing second delay compensation function, second phase compensation function, and second amplitude compensation function are adaptively adjusted, the target band is a band in which the second original audio signal is located. The measured sound signal is denoted as C(t) below.

S1002: Determine a superimposed sound signal of the first playing sound signal and the first cancellation sound signal at the first measurement point based on the first transfer function, the second transfer function, the first delay compensation function, the first phase compensation function, and the first amplitude compensation function.

Refer to the foregoing related descriptions in FIG. 5A. The superimposed sound signal should be D1(z)K1(z) H1(z)X+G1(z)G2(z)K2(z)H2(z)X. When one or more of the foregoing second delay compensation function, second phase compensation function, and second amplitude compensation function are adaptively adjusted, a superimposed sound signal of the second playing sound signal and the second cancellation sound signal at the first measurement point is determined based on the first transfer function, the second transfer function, the second delay compensation function, the second phase compensation function, and the second amplitude compensation function.

S1003: Adjust the first delay compensation function, the first phase compensation function, and the first amplitude compensation function based on sound intensity of the measured sound signal and the superimposed sound signal.

It may be understood that if the determined first delay compensation function, first phase compensation function, and first amplitude compensation function are accurate enough, the superimposed sound signal should be a real sound signal at the first measurement point. Therefore, the measured sound signal obtained through measurement in practice should be the same as the superimposed sound signal. However, because the first delay compensation function, the first phase compensation function, and the first amplitude compensation function are not accurate enough, a difference should exist between the measured sound signal and the superimposed sound signal. The difference can reflect a difference between the currently determined compensation functions and accurate compensation functions to some extent. Therefore, the determined first delay compensation function, first phase compensation function, and first amplitude compensation function can be adjusted to be more accurate based on the difference.

An adjustment manner varies with an application scenario. For example, in a possible embodiment, the first delay compensation function, the first phase compensation function, and the first amplitude compensation function may be adjusted by using a least mean square adaptive rule. In another possible embodiment, the first delay compensation function, the first phase compensation function, and the first amplitude compensation function may be adjusted by using a pre-trained neural network model used to adjust a compensation function. This is not limited in this application.

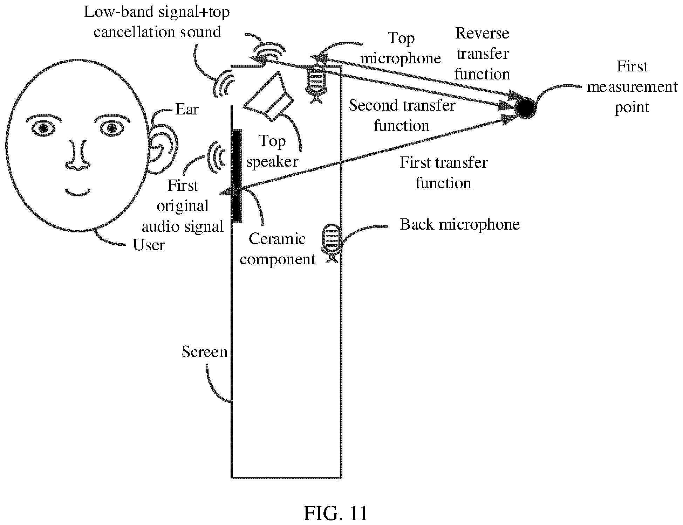

With reference to a specific application scenario, the following describes, by using an example, the method for adaptively adjusting a compensation function provided in this application. Refer to FIG. 11. In an example of FIG. 11, the first sound emitting unit is a ceramic component, and the second sound emitting unit is a top speaker. In this example, the first playing sound signal emitted by the ceramic component is canceled out by using the first cancellation sound signal emitted by the top speaker.

In this example, a speaker is disposed at the first measurement point, the speaker is driven to emit a sound signal of the target band, and a sound signal is collected by using a top microphone of the mobile phone, to calculate a conversion relationship between the sound signal emitted by the speaker and the sound signal collected by the top microphone of the mobile phone. The sound signal collected by the top microphone is an ambient sound signal collected by the microphone when the speaker plays the sound signal of the target band.

The sound signal at the first measurement point is determined based on the direction transfer function and the ambient sound signal that is of the target band and that is collected by the top microphone when the electronic device plays the audio signal, and is used as the measured sound signal. Specifically, a method for determining the sound signal at the first measurement point based on the ambient sound signal is not limited.

For example, when only one first measurement point exists, the conversion relationship is denoted as a reverse transfer function. When a plurality of first measurement points exist, for each first measurement point, one conversion relationship, that is, a conversion relationship between a sound signal emitted by a speaker disposed at the first measurement point and an ambient sound signal, may be calculated, weighted averaging may be performed on all conversion relationships, and a result of weighted averaging may be used as the reverse transfer function. The reverse transfer function is denoted as H'(z) below. It may be understood that the reverse transfer function H'(z) is a conversion relationship for a sound signal from the speaker at the first measurement point to the microphone of the mobile phone, and in an actual sound leakage case, a conversion relationship (denoted as a target conversion relationship) from a leaked sound of the component that is of the mobile phone and that pushes the screen to emit a sound and/or a speaker of the mobile phone to the first measurement point needs to be determined. Therefore, in an example, a reciprocal of the reverse transfer function H'(z) may be calculated to represent the target conversion relationship. In another example, the target conversion relationship may alternatively be determined in another manner based on the reverse transfer function H'(z). For example, a neural network model is established, and the reverse transfer function H'(z) is input into the neural network model, so that the neural network outputs the target conversion relationship. This is not limited in this application.

It may be understood that a sound signal collected by the top microphone when the electronic device plays the audio signal includes the ambient sound signal and an echo of the electronic device. Therefore, the ambient sound signal may be obtained by performing echo filtering on the collected sound signal. If no sound source other than the electronic device exists in a scenario in which the electronic device is located, an ambient sound may be considered as a non-canceled part of a sound emitted by the electronic device, and a sound signal of the target band in the non-canceled part is a leaked sound of the electronic device. Therefore, the ambient sound signal that is of the target band and that may be selected from the ambient sound by using a band-pass filter may be considered as the leaked sound of the electronic device.

The leaked sound of the electronic device is generated when a non-canceled part in the first playing sound signal is transferred to the top microphone. Assuming that the leaked sound is denoted as A, the non-canceled part, at the first measurement point, in the first playing sound signal may be calculated as A/H'(z) based on the reverse transfer function. The non-canceled part is the sound signal that is of the target band at the first measurement point and that exists when the electronic device plays the audio signal, namely, the measured sound signal.

In this embodiment, the measured sound signal may be determined by using the ambient sound signal collected by the microphone of the electronic device, so that the electronic device can adaptively adjust, based on the ambient sound signal collected by the microphone of the electronic device, the compensation functions used by the electronic device, thereby further reducing the leaked sound of the electronic device.

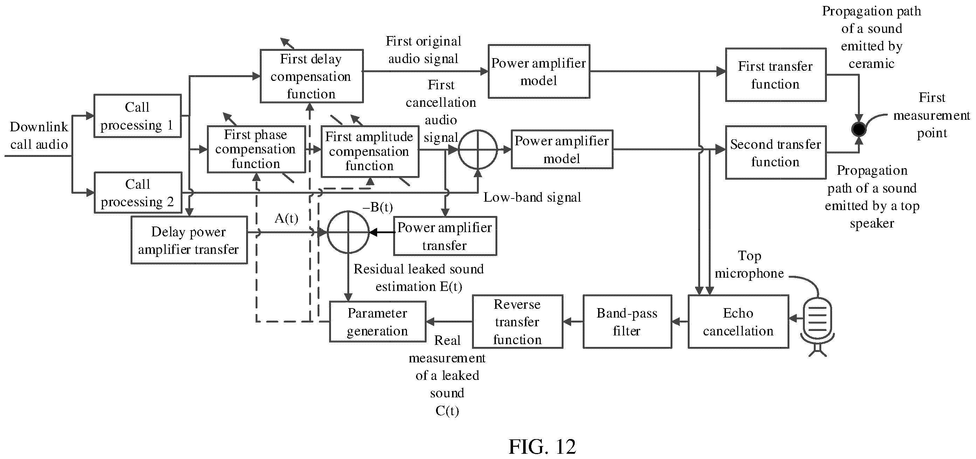

In this embodiment, a block diagram of a system of the electronic device is shown in FIG. 12. Voice1 forms the first playing sound signal under the action of D1(z), K1(z), and H1(z), and the first playing sound signal is transferred to the first measurement point. In addition, Voice1 (call processing 1) forms the first cancellation audio signal Voice1_R under the action of G1(z) and G2(z), Voice1_R and Voice2 (call processing 2) form the first cancellation sound signal and a low-band sound signal under the action of K2(z) and H2(z), and the first cancellation sound signal and the low-band sound signal are transferred to the first measurement point. The first playing sound signal and the first cancellation sound signal cancel each other out at the first measurement point, so that leakage of Voice1 is reduced.

Echo cancellation and band-pass filtering processing are performed on the sound signal collected by the top microphone, to obtain the ambient sound signal, and the ambient sound signal is under the action of the reciprocal of the reverse transfer function H'(z) to obtain the measured sound signal, where for the reverse transfer function H'(z). In addition, Voice1 forms a sound signal A(t) under the action of D1(z)K1(z)H1(z), and Voice_R forms a sound signal B(t) under the action of K2(z)H2(z). It can be learned from the foregoing analysis that a sum of A(t) and B(t) is the superimposed sound signal of the first playing sound signal and the first cancellation sound signal at the first measurement point. The sum of A(t) and B(t) is denoted as E(t) below. E(t) and C(t) are input into a parameter generation module, and the parameter generation module adjusts one or more functions of D1(z), G1(z), and G2(z) based on E(t) and C(t), in other words, performs step S1003. The parameter generation module may be constructed based on the LMS (Least Mean Square, least mean square) adaptive rule, or may be constructed based on an AU rule (for example, for an NN (Neural Network, neural network) trained based on experimental data). This is not limited in this application.

Some electronic devices may include a microphone other than the top microphone. For example, some mobile phones include a top microphone, a back microphone, and a bottom microphone. For these electronic devices, a measured sound signal may alternatively be determined by using an ambient sound signal collected by another microphone. A principle is the same as that in the case of the top microphone, and therefore, is not described herein again.

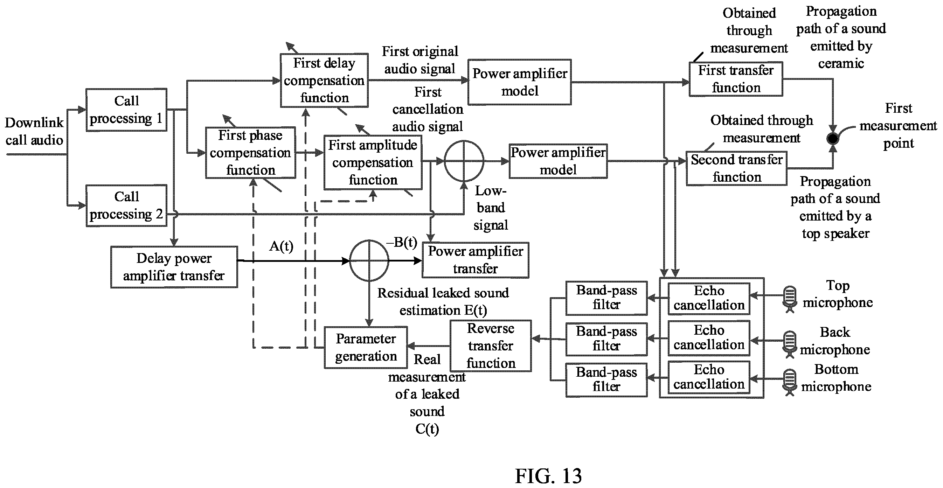

In addition, in an application scenario in which a plurality of microphones exist in the electronic device, a measured sound signal may be determined by using ambient sound signals collected by the plurality of microphones. For example, as shown in FIG. 13, in this example, the electronic device includes a top microphone, a back microphone, and a bottom microphone.

In this example, a reverse transfer function from a sound signal to each microphone is measured, where the sound signal is emitted by the first measurement point. A manner of measuring a reverse transfer function from the sound signal to the back microphone and a manner of measuring a reverse transfer function from the sound signal to the bottom microphone are the same as a manner of measuring the reverse transfer function from the sound signal to the top microphone. Therefore, for the measurement manner, refer to the foregoing example shown in FIG. 11, and details are not described herein again. The sound signal at the first measurement point is determined based on the reverse transfer function of each microphone and an ambient sound signal collected by each microphone when the electronic device plays the audio signal, and is used as the measured sound signal.

In this example, echo cancellation and processing of the band-pass filter are performed on the sound signal collected by each microphone, to obtain the ambient sound signal collected by each microphone, the ambient sound signals collected by the microphones are superimposed, and a reciprocal of an average reverse transfer function is used for a sound signal obtained through superimposition to generate the measured sound signal C(t). The average reverse transfer function is obtained by performing weighted averaging on the reverse transfer functions from the sound signal to the microphones.

Principles of generation of A(t) and B(t) and the parameter generation module in this example are the same as those in the example shown in FIG. 12. Refer to the related descriptions in the example shown in FIG. 12. Details are not described herein again.

The foregoing examples describe cases in which a sound signal emitted by the first sound emitting unit is canceled out by using a sound signal emitted by the second sound emitting unit and a sound signal emitted by the second sound emitting unit is canceled out by using a sound signal emitted by the first sound emitting unit. Some electronic devices not only include a sound emitting unit other than the first sound emitting unit and the second sound emitting unit. In the example shown in FIG. 7, the electronic device includes a sound emitting unit named the bottom speaker in addition to the first sound emitting unit (namely, the top speaker) and the second sound emitting unit (the ceramic component).

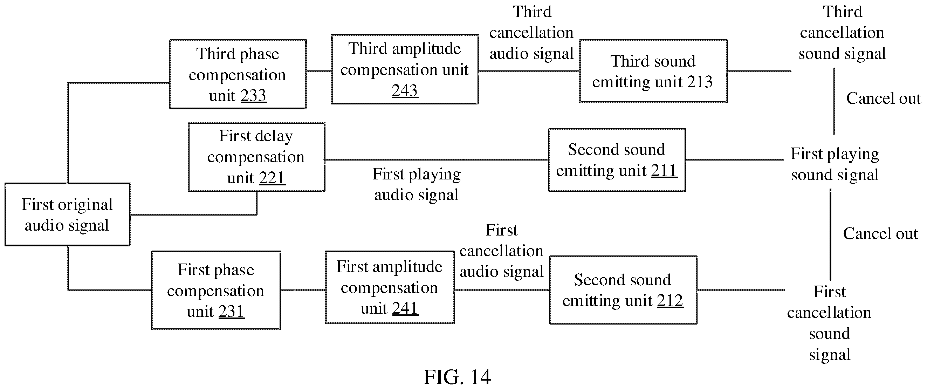

Therefore, in some application scenarios, a sound signal emitted by the first sound emitting unit may be canceled out by jointly using sound signals emitted by the second sound emitting unit and another sound emitting unit, so that the leaked sound of the electronic device is further reduced. For example, as shown in FIG. 14, in an example, the first sound emitting unit is a ceramic component, the second sound emitting unit is a top speaker, and the electronic device further includes a bottom speaker 213, a third phase compensation unit 233, and a third amplitude compensation unit 243.

The third phase compensation unit 233 and the third amplitude compensation unit 243 are configured to adjust the phase and the amplitude of the first original audio signal based on a third phase compensation function and a third amplitude compensation function, to obtain a third cancellation audio signal.

The bottom speaker (a third sound emitting unit) 213 is configured to emit a third cancellation sound signal based on the third cancellation audio signal.

The third phase compensation unit 233 is configured to adjust a phase of an input audio signal based on the third phase compensation function, and the third amplitude compensation unit 243 is configured to adjust an amplitude of the input audio signal based on the third amplitude compensation function. In a possible embodiment, input of the third phase compensation unit 233 is the first original audio signal, and input of the third amplitude compensation unit 243 is output of the third phase compensation unit 233. In this example, output of the third amplitude compensation unit 243 is the third cancellation sound signal. In another possible embodiment, input of the third amplitude compensation unit 243 is the first original audio signal, and input of the third phase compensation unit 233 is output of the third amplitude compensation unit 243. In this example, output of the third phase compensation unit 233 is the third cancellation sound signal.

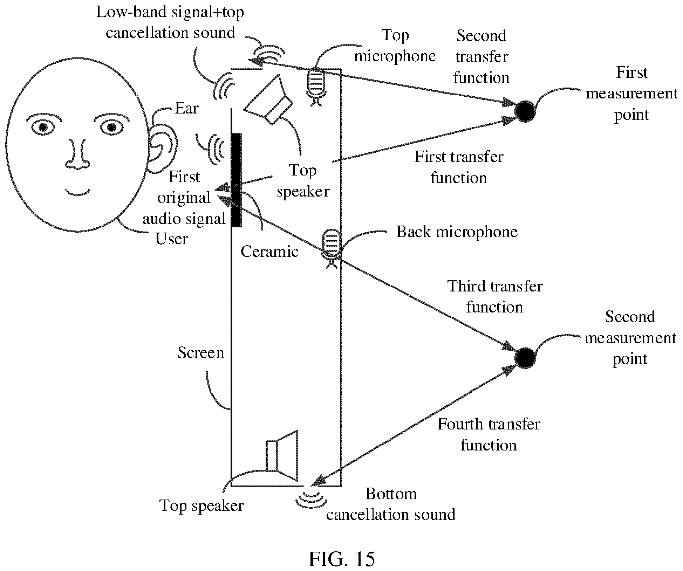

As analyzed above, when a proper third phase compensation function and third amplitude compensation function are used, the third cancellation sound signal can cancel out the first playing sound signal. The third phase compensation function and the third amplitude compensation function are determined by using the parameter determining method for an electronic device provided in this application. The following describes, by using an example, how to determine the third phase compensation function and the third amplitude compensation function. Refer to FIG. 15. In this example, a second measurement point is set in addition to the first measurement point. For a manner of setting the second measurement point, refer to the manner of setting the first measurement point. This is not limited in this application. However, the following conditions should be met: A distance between the first measurement point and the top speaker is less than a distance between the first measurement point and the bottom speaker, and a distance between the second measurement point and the top speaker is greater than a distance between the second measurement point and the bottom speaker, in other words, the first measurement point is closer to the top speaker, and the second measurement point is closer to the bottom speaker.

In this example, the parameter determining method for an electronic device provided in this application further includes the following steps.

S303: Determine a third transfer function from a sound signal of the first sound emitting unit to the second measurement point and a fourth transfer function from a sound signal played by the bottom speaker to the second measurement point.

A manner of determining the third transfer function and the fourth transfer function is the same as that of determining the first transfer function and the third transfer function. A difference lies only in that a measurement point changes from the first measurement point to the second measurement point. Refer to the related descriptions of the first transfer function and the second transfer function in S301. Details are not described herein again. For ease of description, in the following descriptions, the third transfer function is denoted as H3(z), and the fourth transfer function is denoted as H4(z).

S304: Determine, based on the third transfer function and the fourth transfer function, the third phase compensation function and the third amplitude compensation function that enable the first playing sound signal and the third cancellation sound signal to cancel each other out at the second measurement point.

For ease of description, in the following descriptions, the third phase compensation function is denoted as G5(z), and the third amplitude compensation function is denoted as G6(z). It may be understood that if the first original audio signal is denoted as X, the first playing sound signal is D1(z)X obtained after the delay of the first original audio signal X is adjusted by using D1(z), K1(z)D1(z)X is obtained under the action of K1(z) of the first sound emitting unit, and K1(z)D1(z)X is transferred to the second measurement point by using H3(z) to form a sound signal H32(z)K1(z)D1(z)X. The third cancellation sound signal is G5(z)G6(z)X obtained by adjusting the amplitude and the phase of the first original audio signal Y by using G5(z)G6(z), K3(z)G5(z)G6(z)X is obtained under the action of a signal channel and a power amplifier model K3(z) of the bottom speaker for the third cancellation audio signal, and K3(z)G5(z)G6(z)X is transferred to the second measurement point by using H4(z) to form a sound signal H4(z)K3(z)G5(z)G6(z)Y. Therefore, a superimposed sound signal formed through superimposition of the first playing sound signal and the third cancellation sound signal at the second measurement point is D1(z)K1(z)H3(z)X+GS(z)G6(z)K3(z)H4(z)X.

To enable the first playing sound signal and the third cancellation sound signal to cancel each other out at the second measurement point, sound intensity of the superimposed sound signal needs to be relatively low, in other words, a formula (5) needs to be met:

$$|D1(z)K1(z)H3(z)X+G5(z)G6(z)K3(z)H4(z)X|=g \quad (5)$$

When g=0, the formula (3) may be rewritten as a formula (6):

$$D1(z)K1(z)H3(z)=-G5(z)G6(z)K3(z)H4(z) \quad (6)$$

In the foregoing formula, D1(z), K1(z), H3(z), K3(z) (a determining manner thereof is the same as that of K1(z) and K2(z)), and H4(z) are determined. Therefore, G3(z) and G4(z) that enable the formula (5) or (6) to hold true may be determined. As analyzed above, using the determined G5(z) and G6(z) can enable the first playing sound signal and the third cancellation sound signal to cancel each other out at the second measurement point. Specific values of G5(z) and G6(z) are not limited in this application. In addition, for ease of calculation, in addition to the foregoing formula (5) or formula (6), another constraint, for example, a constraint that a delay of D1(z) is the same as a sum of delays of G5(z) and G6(z), may be added.

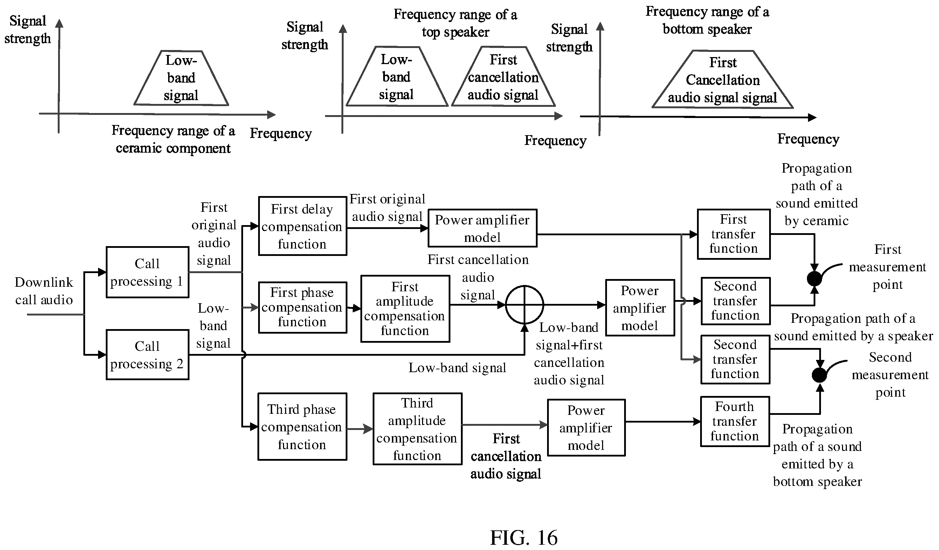

In this example, a block diagram of a system of the electronic device is shown in FIG. 16. Voice1 forms the first playing sound signal under the action of D1(z), K1(z), and H1(z), and the first playing sound signal is transferred to the first measurement point and the second measurement point. In addition, Voice1 forms the first cancellation audio signal Voice1_R1 under the action of G1(z) and G2(z), Voice1_R1 and Voice2 form the first cancellation sound signal and a low-band sound signal under the action of K2(z) and H2(z), and the first cancellation sound signal and the low-band sound signal are transferred to the first measurement point. The first playing sound signal and the first cancellation sound signal cancel each other out at the first measurement point.

In addition, Voice1 forms the third cancellation audio signal Voice1_R2 under the action of G5(z) and G6(z), Voice1_R2 forms the third cancellation sound signal and a low-band sound signal under the action of K3(z) and H4(z), and the third cancellation sound signal and the low-band sound signal are transferred to the second measurement point. The first playing sound signal and the third cancellation sound signal cancel each other out at the third measurement point.

In this embodiment, the first playing sound signal emitted by the component that pushes the screen to emit a sound can be canceled out at the first measurement point and the second measurement point respectively by using cancellation sound signals emitted by the top speaker and the bottom speaker, so that the sound signal emitted by the component that pushes the screen to emit a sound is canceled in larger space, thereby further reducing the leaked sound of the electronic device.

In addition, in this example, bands of Voice1_R1, Voice1_R2, and Voice1 should be completely the same or partially overlap. Therefore, spectrums of Voice1, Voice1_R1, Voice1_R2, and Voice2 in this example are shown in FIG. 16.

Corresponding to the foregoing parameter determining method for an electronic device, this application further provides a parameter determining apparatus for an electronic device. The electronic device includes a first sound emitting unit, a second sound emitting unit, a first delay compensation unit, a first phase compensation unit, and a first amplitude compensation unit. The first delay compensation unit is configured to adjust, based on a first delay compensation function, a delay of a first original audio signal to be played by the first sound emitting unit, to obtain a first playing audio signal, and the first sound emitting unit is configured to emit a first playing sound signal based on the first playing audio signal. The first phase compensation unit and the first amplitude compensation unit are configured to adjust a phase and an amplitude of the first original audio signal based on a first phase compensation function and a first amplitude compensation function, to obtain a first cancellation audio signal. The second sound emitting unit is configured to emit a first cancellation sound signal based on the first cancellation audio signal.

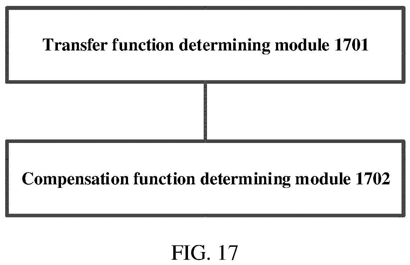

The parameter determining apparatus for an electronic device is shown in FIG. 17, and includes:

a transfer function determining module 1701, configured to determine a first transfer function from a sound signal of the first sound emitting unit to a first measurement point and a second transfer function from a sound signal played by the second sound emitting unit to the first measurement point; and

a compensation function determining module 1702, configured to determine, based on the first transfer function and the second transfer function, the first delay compensation function, the first phase compensation function, and the first amplitude compensation function that enable the first playing sound signal and the first cancellation sound signal to cancel each other out at the first measurement point.

In a possible embodiment, the electronic device further includes a second delay compensation unit, a second phase compensation unit, and a second amplitude compensation unit; the second delay compensation unit is configured to adjust, based on a second delay compensation function, a delay of a second original audio signal to be played by the second sound emitting unit, to obtain a second playing audio signal, and the second sound emitting unit is further configured to emit a second playing sound signal based on the second playing audio signal; the second phase compensation unit and the second amplitude compensation unit are configured to adjust a phase and an amplitude of the second original audio signal based on a second phase compensation function and a second amplitude compensation function, to obtain a second cancellation audio signal; and the first sound emitting unit is further configured to emit a second cancellation sound signal based on the second cancellation audio; and the compensation function determining module 1702 is further configured to determine, based on the first transfer function and the second transfer function, the second delay compensation function, the second phase compensation function, and the second amplitude compensation function that enable the second playing sound signal and the second cancellation sound signal to cancel each other out at the first measurement point.

In a possible embodiment, the first sound emitting unit is a component that pushes a screen to emit a sound, the second audio playing unit is a top speaker, the first original audio signal is an audio sub-signal that is located in a first band and that is in an audio signal to be played by the electronic device, the second original audio signal is an audio sub-signal that is located in a second band and that is in the audio signal to be played by the electronic device, and a lower limit of the second band is greater than an upper limit of the first band.

In a possible embodiment, the first sound emitting unit is a component that pushes a screen to emit a sound, the second audio playing unit is a top speaker, and the electronic device further includes a bottom speaker, a third phase compensation unit, and a third amplitude compensation unit; the third phase compensation unit and the third amplitude compensation unit are configured to adjust the phase and the amplitude of the first original audio signal based on a third phase compensation function and a third amplitude compensation function, to obtain a third cancellation audio signal; and the bottom speaker is configured to emit a third cancellation sound signal based on the third cancellation audio signal;

the transfer function determining module 1701 is further configured to determine a third transfer function from a sound signal of the first sound emitting unit to a second measurement point and a fourth transfer function from a sound signal played by the bottom speaker to the second measurement point; and
the compensation function determining module 1702 is further configured to determine, based on the third transfer function and the fourth transfer function, the third phase compensation function and the third amplitude compensation function that enable the first playing sound signal and the third cancellation sound signal to cancel each other out at the second measurement point, where
a distance between the first measurement point and the top speaker is less than a distance between the first measurement point and the bottom speaker, and a distance between the second measurement point and the top speaker is greater than a distance between the second measurement point and the bottom speaker.

In a possible embodiment, the first sound emitting unit is a component that pushes a screen to emit a sound, the second sound emitting unit is a top speaker, the first original audio signal is an audio sub-signal that is located in a third band and that is in an audio signal to be played by the electronic device, a frequency lower limit of the third band is greater than a first threshold, and a frequency upper limit of the third band is less than a second threshold.

In a possible embodiment, the apparatus further includes an adaptive adjustment module, configured to: determine a sound signal that is of a target band at the first measurement point and that exists when the electronic device plays an audio signal, and use the sound signal as a measured sound signal, where the target band is a band in which the first original audio signal is located;

determine a superimposed sound signal of the first playing sound signal and the first cancellation sound signal at the first measurement point based on the first transfer function, the second transfer function, the first delay compensation function, the first phase compensation function, and the first amplitude compensation function; and
adjust one or more of the first delay compensation function, the first phase compensation function, and the first amplitude compensation function based on sound intensity of the measured sound signal and the superimposed sound signal.

In a possible embodiment, the electronic device further includes a microphone; and that an adaptive adjustment module determines a sound signal that is of a target band at the first measurement point and that exists when the electronic device plays an audio signal, and uses the sound signal as a measured sound signal includes:
determining an obtained sound signal at the first measurement point based on an ambient sound signal that is of the target band and that is collected by the microphone when the electronic device plays the audio signal, and using the sound signal as the measured sound signal.

In a possible embodiment, that an adaptive adjustment module determines a sound signal that is of a target band at the first measurement point and that exists when the electronic device plays an audio signal, and uses the sound signal as a measured sound signal includes:

measuring a reverse transfer function from a sound signal to the microphone, where the sound signal is emitted by the first measurement point; and
determining the sound signal at the first measurement point based on the reverse transfer function and the ambient sound signal that is of the target band and that is collected by the microphone when the electronic device plays the audio signal, and using the sound signal as the measured sound signal.

In a possible embodiment, there are a plurality of microphones; and
that an adaptive adjustment module determines a sound signal that is of a target band at the first measurement point and that exists when the electronic device plays an audio signal, and uses the sound signal as a measured sound signal includes:

measuring a reverse transfer function from a sound signal to each microphone, where the sound signal is emitted by the first measurement point; and
determining the sound signal at the first measurement point based on the reverse transfer function of each microphone and an ambient sound signal collected by each microphone when the electronic device plays the audio signal, and using the sound signal as the measured sound signal.

In a possible embodiment, the first sound emitting unit is a top speaker, the second sound emitting unit is a component that pushes a screen to emit a sound, and the first measurement point is located between the top speaker and the component that pushes the screen to emit a sound, and is located on a side close to the screen of the electronic device.

In still another embodiment provided in this application, a computer-readable storage medium is further provided. The computer-readable storage medium stores a computer program, and when the computer program is executed by a processor, the steps of any one of the foregoing parameter determining methods for an electronic device are implemented.

In still another embodiment provided in this application, a computer program product including instructions is further provided. When the computer program product runs on a computer, the computer is enabled to perform any one of the parameter determining methods for an electronic device in the foregoing embodiments.

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from a computer-readable storage medium to another computer-readable storage medium. For example, the computer instructions may be transmitted from a website, computer, server, or data center to another website, computer, server, or data center in a wired manner (for example, by using a coaxial cable, an optical fiber, or a digital subscriber line (DSL)) or a wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

It should be noted that the relational terms such as first and second in this specification are used only to differentiate an entity or operation from another entity or operation, and do not require or imply any actual relationship or sequence between these entities or operations. In addition, the term "include", "comprise", or any other variant thereof is intended to cover non-exclusive inclusion, so that a process, method, article, or device that includes a series of elements includes not only those elements but also other elements that are not expressly listed, or includes elements inherent to such a process, method, article, or device. Without more constraints, an element defined by the phrasing "including a..." does not preclude the existence of other identical elements in the process, method, article, or device that includes the element.

The embodiments of this specification are all described in a relevant manner. For same or similar parts in the embodiments, refer to the embodiments, and descriptions of each embodiment focus on a difference from other embodiments. Especially, the apparatus embodiment, the computer-readable storage medium embodiment, and the computer program product embodiment are substantially similar to the method embodiments, and therefore, are described relatively briefly. For related parts, refer to the partial descriptions of the method embodiments.

The foregoing descriptions are merely preferred embodiments of this application, but are not intended to limit the protection scope of this application. Any modification, equivalent replacement, improvement, or the like made within the spirit and principle of this application shall fall within the protection scope of this application.

**Claims**

1. An electronic device, wherein the electronic device comprises a first sound emitting unit, a second sound emitting unit, a first delay compensation unit, a first phase compensation unit, and a first amplitude compensation unit;

   the first delay compensation unit is configured to adjust, based on a first delay compensation function, a delay of a first original audio signal to be played by the first sound emitting unit, to obtain a first playing audio signal;
   the first sound emitting unit is configured to emit a first playing sound signal based on the first playing audio signal;
   the first phase compensation unit and the first amplitude compensation unit are configured to respectively adjust a phase and an amplitude of the first original audio signal based on a first phase compensation function and a first amplitude compensation function, to obtain a first cancellation audio signal; and
   the second sound emitting unit is configured to emit a first cancellation sound signal based on the first cancellation audio signal.

2. The electronic device according to claim 1, wherein the first delay compensation function is a delay compensation function that is determined based on a first transfer function and a second transfer function and that enables the first playing sound signal and the first cancellation sound signal to cancel each other out at a first measurement point, the first transfer function is a transfer function from a sound signal of the first sound emitting unit to the first measurement point, and the second transfer function is a transfer function from a sound signal played by the second sound emitting unit to the first measurement point; and the first phase compensation function is a phase compensation function that is determined based on the first transfer function and the second transfer function and that enables the first playing sound signal and the first cancellation sound signal to cancel each other out at the first measurement point, and the first amplitude compensation function is an amplitude compensation function that is determined based on the first transfer function and the second transfer function and that enables the first playing sound signal and the first cancellation sound signal to cancel each other out at the first measurement point.

3. The electronic device according to claim 1, wherein the electronic device further comprises a second delay compensation unit, a second phase compensation unit, and a second amplitude compensation unit;

> the second delay compensation unit is configured to adjust, based on a second delay compensation function, a delay of a second original audio signal to be played by the second sound emitting unit, to obtain a second playing audio signal;
> the second sound emitting unit is further configured to emit a second playing sound signal based on the second playing audio signal;
> the second phase compensation unit and the second amplitude compensation unit are configured to adjust a phase and an amplitude of the second original audio signal based on a second phase compensation function and a second amplitude compensation function, to obtain a second cancellation audio signal; and
> the first sound emitting unit is further configured to emit a second cancellation sound signal based on the second cancellation audio, wherein
> the second delay compensation function is a delay compensation function that is determined based on the first transfer function and the second transfer function and that enables the second playing sound signal and the second cancellation sound signal to cancel each other out at the first measurement point, the second phase compensation function is a phase compensation function that is determined based on the first transfer function and the second transfer function and that enables the second playing sound signal and the second cancellation sound signal to cancel each other out at the first measurement point, and the second amplitude compensation function is an amplitude compensation function that is determined based on the first transfer function and the second transfer function and that enables the second playing sound signal and the second cancellation sound signal to cancel each other out at the first measurement point.

4. The electronic device according to claim 3, wherein the first sound emitting unit is a component that pushes a screen to emit a sound, the second audio playing unit is a top speaker, the first original audio signal is an audio sub-signal that is located in a first band and that is in an audio signal to be played by the electronic device, the second original audio signal is an audio sub-signal that is located in a second band and that is in the audio signal to be played by the electronic device, and a lower limit of the second band is greater than an upper limit of the first band.

5. The electronic device according to claim 1, wherein the first sound emitting unit is a component that pushes a screen to emit a sound, the second audio playing unit is a top speaker, and the electronic device further comprises a bottom speaker, a third phase compensation unit, and a third amplitude compensation unit;

> the third phase compensation unit and the third amplitude compensation unit are configured to adjust the phase and the amplitude of the first original audio signal based on a third phase compensation function and a third amplitude compensation function, to obtain a third cancellation audio signal; and
> the bottom speaker is configured to emit a third cancellation sound signal based on the third cancellation audio, wherein
> the third phase compensation function is a phase compensation function that is determined based on a third transfer function and a fourth transfer function and that enables the first playing sound signal and the third cancellation sound signal to cancel each other out at a second measurement point, the third transfer function is a transfer function from a sound signal of the first sound emitting unit to the second measurement point, the fourth transfer function is a transfer function from a sound signal of the bottom speaker to the second measurement point, the third amplitude compensation function is an amplitude compensation function that is determined based on the third transfer function and the fourth transfer function and that enables the first playing sound signal and the third cancellation sound signal to cancel each other out at the second measurement point, a distance between the first measurement point and the top speaker is less than a distance between the first measurement point and the bottom speaker, and a distance between the second measurement point and the top speaker is greater than a distance between the second measurement point and the bottom speaker.

6. The electronic device according to claim 1, wherein

the first sound emitting unit is a component that pushes a screen to emit a sound, the second sound emitting unit is a top speaker, and the first original audio signal is an audio sub-signal that is located in a third band and that is in an audio signal to be played by the electronic device;
or
the first sound emitting unit is a top speaker, the second sound emitting unit is a component that pushes a screen to emit a sound, the first original audio signal is an audio sub-signal that is located in a fourth band and that is in an audio signal to be played by the electronic device, and a lower limit of the fourth band is greater than an upper limit of the third band.

7. The electronic device according to claim 1, wherein one or more of the first delay compensation function, the first phase compensation function, and the first amplitude compensation function are adjusted based on sound intensity of a measured sound signal and a superimposed sound signal, the measured sound signal is a sound signal that is of a target band at the first measurement point and that exists when the electronic device plays an audio signal, the target band is a band in which the first original audio signal is located, and the superimposed sound signal is a superimposed signal that is of the first playing sound signal and the first cancellation sound signal at the first measurement point and that is determined based on the first transfer function, a second transfer function, the first delay compensation function, the first phase compensation function, and the first amplitude compensation function.

8. The electronic device according to claim 7, wherein the electronic device further comprises a microphone; and the measured sound signal is a sound signal, at the first measurement point, that is determined based on an ambient sound signal that is of the target band and that is collected by the microphone when the electronic device plays the audio signal.

9. The electronic device according to claim 8, wherein
the measured sound signal is a sound signal, at the first measurement point, that is determined based on a reverse transfer function and the ambient sound signal that is of the target band and that is collected by the microphone when the electronic device plays the audio signal, and the reverse transfer function is a measured transfer function from a sound signal to the microphone, wherein the sound signal is emitted by the first measurement point.

10. The electronic device according to claim 8, wherein there are a plurality of microphones, the reverse transfer function is a measured transfer function from a sound signal to each microphone, wherein the sound signal is emitted by the first measurement point, and the measured sound signal is a sound signal, at the first measurement point, that is determined based on the reverse transfer function of each microphone and an ambient sound signal collected by each microphone when the electronic device plays the audio signal.

11. The electronic device according to claim 1, wherein the first sound emitting unit is a top speaker, the second sound emitting unit is a component that pushes a screen to emit a sound, and the first measurement point is located between the top speaker and the component that pushes the screen to emit a sound, and is located on a side close to the screen of the electronic device.

12. A parameter determining method for an electronic device, wherein the electronic device comprises a first sound emitting unit, a second sound emitting unit, a first delay compensation unit, a first phase compensation unit, and a first amplitude compensation unit; the first delay compensation unit is configured to adjust, based on a first delay compensation function, a delay of a first original audio signal to be played by the first sound emitting unit, to obtain a first playing audio signal, and the first sound emitting unit is configured to emit a first playing sound signal based on the first playing audio signal; the first phase compensation unit and the first amplitude compensation unit are configured to adjust a phase and an amplitude of the first original audio signal based on a first phase compensation function and a first amplitude compensation function, to obtain a first cancellation audio signal; and the second sound emitting unit is configured to emit a first cancellation sound signal based on the first cancellation audio signal; and the method comprises:

determining a first transfer function from a sound signal of the first sound emitting unit to a first measurement point and a second transfer function from a sound signal played by the second sound emitting unit to the first measurement point; and
determining, based on the first transfer function and the second transfer function, the first delay compensation function, the first phase compensation function, and the first amplitude compensation function that enable the first playing sound signal and the first cancellation sound signal to cancel each other out at the first measurement point.

13. The method according to claim 12, wherein the electronic device further comprises a second delay compensation unit, a second phase compensation unit, and a second amplitude compensation unit, the second delay compensation unit is configured to adjust, based on a second delay compensation function, a delay of a second original audio signal to be played by the second sound emitting unit, to obtain a second playing audio signal, and the second sound emitting unit is further configured to emit a second playing sound signal based on the second playing audio signal; the second phase compensation unit and the second amplitude compensation unit are configured to adjust a phase and an amplitude of the second original audio signal based on a second phase compensation function and a second amplitude compensation function, to obtain a second cancellation audio signal; and the first sound emitting unit is further configured to emit a second cancellation sound signal based on the second cancellation audio; and
the method further comprises:
determining, based on the first transfer function and the second transfer function, the second delay compensation function, the second phase compensation function, and the second amplitude compensation function that enable the second playing sound signal and the second cancellation sound signal to cancel each other out at the first measurement point.

14. The method according to claim 13, wherein the first sound emitting unit is a component that pushes a screen to emit a sound, the second audio playing unit is a top speaker, the first original audio signal is an audio sub-signal that is located in a first band and that is in an audio signal to be played by the electronic device, the second original audio signal is an audio sub-signal that is located in a second band and that is in the audio signal to be played by the electronic device, and a lower limit of the second band is greater than an upper limit of the first band.

15. The method according to claim 12, wherein the first sound emitting unit is a component that pushes a screen to emit a sound, the second audio playing unit is a top speaker, and the electronic device further comprises a bottom speaker, a third phase compensation unit, and a third amplitude compensation unit; the third phase compensation unit and the third amplitude compensation unit are configured to adjust the phase and the amplitude of the first original audio signal based on a third phase compensation function and a third amplitude compensation function, to obtain a third cancellation audio signal; and the bottom speaker is configured to emit a third cancellation sound signal based on the third cancellation audio signal; and
the method further comprises:

determining a third transfer function from a sound signal of the first sound emitting unit to a second measurement point and a fourth transfer function from a sound signal played by the bottom speaker to the second measurement point; and
determining, based on the third transfer function and the fourth transfer function, the third phase compensation function and the third amplitude compensation function that enable the first playing sound signal and the third cancellation sound signal to cancel each other out at the second measurement point, wherein
a distance between the first measurement point and the top speaker is less than a distance between the first measurement point and the bottom speaker, and a distance between the second measurement point and the top speaker is greater than a distance between the second measurement point and the bottom speaker.

16. The method according to claim 12, wherein the first sound emitting unit is a component that pushes a screen to emit a sound, the second sound emitting unit is a top speaker, the first original audio signal is an audio sub-signal that is located in a third band and that is in an audio signal to be played by the electronic device, a frequency lower limit of the third band is greater than a first threshold, and a frequency upper limit of the third band is less than a second threshold.

17. The method according to claim 12, wherein the method further comprises:

determining a sound signal that is of a target band at the first measurement point and that exists when the electronic device plays an audio signal, and using the sound signal as a measured sound signal, wherein the target band is a band in which the first original audio signal is located;
determining a superimposed sound signal of the first playing sound signal and the first cancellation sound signal at the first measurement point based on the first transfer function, the second transfer function, the first delay compensation function, the first phase compensation function, and the first amplitude compensation function; and
adjusting one or more of the first delay compensation function, the first phase compensation function, and the first amplitude compensation function based on sound intensity of the measured sound signal and the superimposed sound signal.

18. The method according to claim 17, wherein the electronic device further comprises a microphone; and
the determining a sound signal that is of a target band at the first measurement point and that exists when the electronic device plays an audio signal, and using the sound signal as a measured sound signal comprises:
determining an obtained sound signal at the first measurement point based on an ambient sound signal that is of the target band and that is collected by the microphone when the electronic device plays the audio signal, and using the sound signal as the measured sound signal.

19. The method according to claim 18, wherein
the determining an obtained sound signal at the first measurement point based on an ambient sound signal that is of the target band and that is collected by the microphone when the electronic device plays the audio signal, and using the sound signal as the measured sound signal comprises:

measuring a reverse transfer function from a sound signal to the microphone, wherein the sound signal is emitted by the first measurement point; and
determining the sound signal at the first measurement point based on the reverse transfer function and the ambient sound signal that is of the target band and that is collected by the microphone when the electronic device plays the audio signal, and using the sound signal as the measured sound signal.

20. The method according to claim 18, wherein there are a plurality of microphones; and
the determining an obtained sound signal at the first measurement point based on an ambient sound signal that is of the target band and that is collected by the microphone when the electronic device plays the audio signal, and using the sound signal as the measured sound signal comprises:

measuring a reverse transfer function from a sound signal to each microphone, wherein the sound signal is emitted by the first measurement point; and
determining the sound signal at the first measurement point based on the reverse transfer function of each microphone and an ambient sound signal collected by each microphone when the electronic device plays the audio signal, and using the sound signal as the measured sound signal.

21. The method according to claim 12, wherein the first sound emitting unit is a top speaker, the second sound emitting unit is a component that pushes a screen to emit a sound, and the first measurement point is located between the top speaker and the component that pushes the screen to emit a sound, and is located on a side close to the screen of the electronic device.

22. A parameter determining apparatus for an electronic device, wherein the electronic device comprises a first sound emitting unit, a second sound emitting unit, a first delay compensation unit, a first phase compensation unit, and a first amplitude compensation unit; the first delay compensation unit is configured to adjust, based on a first delay compensation function, a delay of a first original audio signal to be played by the first sound emitting unit, to obtain a first playing audio signal, and the first sound emitting unit is configured to emit a first playing sound signal based on the first playing audio signal; the first phase compensation unit and the first amplitude compensation unit are configured to adjust a phase and an amplitude of the first original audio signal based on a first phase compensation function and a first amplitude compensation function, to obtain a first cancellation audio signal; and the second sound emitting unit is configured to emit a first cancellation sound signal based on the first cancellation audio signal; and the apparatus comprises:

a transfer function determining module, configured to determine a first transfer function from a sound signal of the first sound emitting unit to a first measurement point and a second transfer function from a sound signal played by the second sound emitting unit to the first measurement point; and
a compensation function determining module, configured to determine, based on the first transfer function and the second transfer function, the first delay compensation function, the first phase compensation function, and the first amplitude compensation function that enable the first playing sound signal and the first cancellation sound signal to cancel each other out at the first measurement point.

23. The apparatus according to claim 22, wherein the electronic device further comprises a second delay compensation unit, a second phase compensation unit, and a second amplitude compensation unit, the second delay compensation unit is configured to adjust, based on a second delay compensation function, a delay of a second original audio signal to be played by the second sound emitting unit, to obtain a second playing audio signal, and the second sound emitting unit is further configured to emit a second playing sound signal based on the second playing audio signal; the second phase compensation unit and the second amplitude compensation unit are configured to adjust a phase and an amplitude of the second original audio signal based on a second phase compensation function and a second amplitude compensation function, to obtain a second cancellation audio signal; and the first sound emitting unit is further configured to emit a second cancellation sound signal based on the second cancellation audio; and

the compensation function determining module is further configured to determine, based on the first transfer function and the second transfer function, the second delay compensation function, the second phase compensation function, and the second amplitude compensation function that enable the second playing sound signal and the second cancellation sound signal to cancel each other out at the first measurement point.

24. The apparatus according to claim 23, wherein the first sound emitting unit is a component that pushes a screen to emit a sound, the second audio playing unit is a top speaker, the first original audio signal is an audio sub-signal that is located in a first band and that is in an audio signal to be played by the electronic device, the second original audio signal is an audio sub-signal that is located in a second band and that is in the audio signal to be played by the electronic device, and a lower limit of the second band is greater than an upper limit of the first band.

25. The apparatus according to claim 22, wherein the first sound emitting unit is a component that pushes a screen to emit a sound, the second audio playing unit is a top speaker, and the electronic device further comprises a bottom speaker, a third phase compensation unit, and a third amplitude compensation unit; the third phase compensation unit and the third amplitude compensation unit are configured to adjust the phase and the amplitude of the first original audio signal based on a third phase compensation function and a third amplitude compensation function, to obtain a third cancellation audio signal; and the bottom speaker is configured to emit a third cancellation sound signal based on the third cancellation audio signal;

the transfer function determining module is further configured to determine a third transfer function from a sound signal of the first sound emitting unit to a second measurement point and a fourth transfer function from a sound signal played by the bottom speaker to the second measurement point; and

the compensation function determining module is further configured to determine, based on the third transfer function and the fourth transfer function, the third phase compensation function and the third amplitude compensation function that enable the first playing sound signal and the third cancellation sound signal to cancel each other out at the second measurement point, wherein

a distance between the first measurement point and the top speaker is less than a distance between the first measurement point and the bottom speaker, and a distance between the second measurement point and the top speaker is greater than a distance between the second measurement point and the bottom speaker.

26. The apparatus according to claim 22, wherein the first sound emitting unit is a component that pushes a screen to emit a sound, the second sound emitting unit is a top speaker, the first original audio signal is an audio sub-signal that is located in a third band and that is in an audio signal to be played by the electronic device, a frequency lower limit of the third band is greater than a first threshold, and a frequency upper limit of the third band is less than a second threshold.

27. The apparatus according to claim 22, wherein the apparatus further comprises an adaptive adjustment module, configured to: determine a sound signal that is of a target band at the first measurement point and that exists when the electronic device plays an audio signal, and use the sound signal as a measured sound signal, wherein the target band is a band in which the first original audio signal is located;

determine a superimposed sound signal of the first playing sound signal and the first cancellation sound signal at the first measurement point based on the first transfer function, the second transfer function, the first delay compensation function, the first phase compensation function, and the first amplitude compensation function; and

adjust one or more of the first delay compensation function, the first phase compensation function, and the first amplitude compensation function based on sound intensity of the measured sound signal and the superimposed sound signal.

28. The apparatus according to claim 27, wherein the electronic device further comprises a microphone; and that an adaptive adjustment module determines a sound signal that is of a target band at the first measurement point and that exists when the electronic device plays an audio signal, and uses the sound signal as a measured sound signal comprises:

determining an obtained sound signal at the first measurement point based on an ambient sound signal that is of the target band and that is collected by the microphone when the electronic device plays the audio signal, and using the sound signal as the measured sound signal.

29. The apparatus according to claim 28, wherein

that an adaptive adjustment module determines a sound signal that is of a target band at the first measurement point and that exists when the electronic device plays an audio signal, and uses the sound signal as a measured sound signal comprises:

measuring a reverse transfer function from a sound signal to the microphone, wherein the sound signal is emitted by the first measurement point; and

determining the sound signal at the first measurement point based on the reverse transfer function and the ambient sound signal that is of the target band and that is collected by the microphone when the electronic device plays the audio signal, and using the sound signal as the measured sound signal.

30. The apparatus according to claim 28, wherein there are a plurality of microphones; and

that an adaptive adjustment module determines a sound signal that is of a target band at the first measurement point and that exists when the electronic device plays an audio signal, and uses the sound signal as a measured sound signal comprises:

measuring a reverse transfer function from a sound signal to each microphone, wherein the sound signal is emitted by the first measurement point; and

determining the sound signal at the first measurement point based on the reverse transfer function of each microphone and an ambient sound signal collected by each microphone when the electronic device plays the audio signal, and using the sound signal as the measured sound signal.

31. The apparatus according to claim 22, wherein the first sound emitting unit is a top speaker, the second sound emitting unit is a component that pushes a screen to emit a sound, and the first measurement point is located between the top speaker and the component that pushes the screen to emit a sound, and is located on a side close to the screen of the electronic device.

32. A computer-readable storage medium, wherein the computer-readable storage medium stores a computer program, and when the computer program is executed by a processor, the method according to any one of claims 12-21 is implemented.

FIG. 1A

FIG. 1B

First playing
audio signal

First delay
compensation
unit 221

First sound
emitting unit
211

First playing
sound signal

Cancel
out

First original
audio signal

First
cancellation
audio signal

First playing
sound signal

First phase
compensation
unit 231

First
amplitude
compensation
unit 241

Second sound
emitting unit
212

First
cancellation
sound signal

FIG. 2A

First sound
emitting unit
211

Second sound
emitting unit
212

Processor 110

First amplitude
compensation
unit 241

First delay
compensation
unit 221

First phase
compensation
unit 231

Audio signal
source

Screen

Microphone

FIG. 2B

Determine a first transfer function from a sound signal of a first sound emitting unit to a first measurement point and a second transfer function from a sound signal played by a second sound emitting unit to the first measurement point

S301

Determine, based on the first transfer function and the second transfer function, a first delay compensation function, a first phase compensation function, and a first amplitude compensation function that enable a first playing sound signal and a first cancellation sound signal to cancel each other out at the first measurement point

S302

FIG. 3

R

Mobile phone

First transfer function

First measurement point

FIG. 4

FIG. 5A

Signal strength

First
original
audio signal

Frequency range of a ceramic component

Frequency

FIG. 5B

Signal strength

Low-band
signal

First
cancellation
audio signal

Frequency range of a top speaker

Frequency

FIG. 5C

Screen

Ceramic component 183

Top speaker 620

Bottom speaker 610

Top sound output slit 622

Top sound output hole 621

Bottom sound output hole 611

Top speaker 620

Ceramic component 183

Bottom speaker 610

Top sound output slit 622

Top sound output hole 621

Bottom sound output hole 611

FIG. 6

Right sound channel (having opposite phases in a middle band and a high band)

Cancellation region

First measurement point

Right sound channel (low band, middle band, and high band)

Screen

Ceramic component 183

Top speaker 620

Left sound channel Bottom sound output hole 611

Bottom speaker 610

Right sound channel (low band, middle band, and high band)

FIG. 7

EP 4 478 694 A1

FIG. 8

FIG. 9A

FIG. 9B

Determine a sound signal that is of a target band at a first measurement point and that exists when an electronic device plays an audio signal, and use the sound signal as a measured sound signal  ⟋ S1001

Determine a superimposed sound signal of a first playing sound signal and a first cancellation sound signal at the first measurement point based on a first transfer function, a second transfer function, a first delay compensation function, a first phase compensation function, and a first amplitude compensation function  ⟋ S1002

Adjust the first delay compensation function, the first phase compensation function, and the first amplitude compensation function based on sound intensity of the measured sound signal and the superimposed sound signal  ⟋ S1003

FIG. 10

FIG. 11

FIG. 12

FIG. 13

Third phase
compensation
unit 233

Third amplitude
compensation unit
243

Third
cancellation
audio signal

Third sound
emitting unit 213

Third
cancellation
sound signal

Cancel out

First original
audio signal

First delay
compensation
unit 221

First playing
audio signal

Second sound
emitting unit 211

First playing
sound signal

Cancel out

First phase
compensation
unit 231

First amplitude
compensation
unit 241

First
cancellation
audio signal

Second sound
emitting unit 212

First
cancellation
sound
signal

FIG. 14

FIG. 15

Signal
strength

Low-
band
signal

Frequency range of a
ceramic component    Frequency

Frequency range of a
top speaker

Signal
strength

Low-
band
signal

First
cancellation
audio signal

Frequency

Frequency range of a
bottom speaker

Signal
strength

First
Cancellation
audio signal signal

Frequency

Downlink
call audio

Call
processing 1

Call
processing 2

First
original
audio
signal

Low-
band
signal

First delay
compensation
function

First original
audio signal

Power amplifier
model

First cancellation
audio
signal

First phase
compensation
function

First
amplitude
compensation
function

Low-band signal

Low-band
signal+first
cancellation
audio signal

Power
amplifier
model

Third phase
compensation
function

Third
amplitude
compensation
function

First
cancellation
audio signal

Power
amplifier
model

First
transfer
function

Propagation
path of a
sound emitted
by ceramic

First
measurement
point

Second
transfer
function

Propagation path of a
sound emitted by a speaker

Second
transfer
function

Second
measurement
point

Fourth
transfer
function

Propagation
path of a sound
emitted by a
bottom speaker

FIG. 16

Transfer function determining module 1701

Compensation function determining module 1702

FIG. 17

# INTERNATIONAL SEARCH REPORT

| | International application No. |
|---|---|
| | **PCT/CN2023/115238** |

**A. CLASSIFICATION OF SUBJECT MATTER**

H04M 1/58(2006.01)i

According to International Patent Classification (IPC) or to both national classification and IPC

**B. FIELDS SEARCHED**

Minimum documentation searched (classification system followed by classification symbols)

IPC: H04M

Documentation searched other than minimum documentation to the extent that such documents are included in the fields searched

Electronic data base consulted during the international search (name of data base and, where practicable, search terms used)

CNTXT; ENTXTC; VEN; CNKI: 补偿, 抵消, 消除, 叠加, 第二, 第一, 主, 辅, 副, 扬声器, 发声单元, 泄露, 漏音, 隐私, 延迟, 延时, 时延, 相位, 幅度, 幅值, 增益, 音频, first, second, speaker, loudspeaker, leakage, sound, eliminat+, cancel+, filter, phase, opposite

**C. DOCUMENTS CONSIDERED TO BE RELEVANT**

| Category* | Citation of document, with indication, where appropriate, of the relevant passages | Relevant to claim No. |
|---|---|---|
| X | CN 1909566 A (LG ELECTRONICS INC.) 07 February 2007 (2007-02-07) description, pages 3-6, and figure 1 | 1, 32 |
| Y | CN 1909566 A (LG ELECTRONICS INC.) 07 February 2007 (2007-02-07) description, pages 3-6, and figure 1 | 2-31 |
| Y | CN 112118339 A (HUAWEI TECHNOLOGIES CO., LTD.) 22 December 2020 (2020-12-22) description, paragraphs [0088]-[0281] | 2-31 |
| A | CN 113992772 A (VIVO COMMUNICATION TECHNOLOGY CO., LTD.) 28 January 2022 (2022-01-28) entire document | 1-32 |
| A | CN 107369459 A (VIVO COMMUNICATION TECHNOLOGY CO., LTD.) 21 November 2017 (2017-11-21) entire document | 1-32 |
| A | CN 113497849 A (HUAWEI TECHNOLOGIES CO., LTD.) 12 October 2021 (2021-10-12) entire document | 1-32 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 November 2023** | **21 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/115238** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 113746975 A (HUAWEI TECHNOLOGIES CO., LTD.) 03 December 2021 (2021-12-03) entire document | 1-32 |

Form PCT/ISA/210 (second sheet) (July 2022)

International application No.

**PCT/CN2023/115238**

| Patent document cited in search report | | | Publication date (day/month/year) | Patent family member(s) | | | Publication date (day/month/year) |
|---|---|---|---|---|---|---|---|
| CN | 1909566 | A | 07 February 2007 | KR | 100652736 | B1 | 01 December 2006 |
| | | | | US | 2007010283 | A1 | 11 January 2007 |
| CN | 112118339 | A | 22 December 2020 | None | | | |
| CN | 113992772 | A | 28 January 2022 | None | | | |
| CN | 107369459 | A | 21 November 2017 | None | | | |
| CN | 113497849 | A | 12 October 2021 | None | | | |
| CN | 113746975 | A | 03 December 2021 | None | | | |

**EP 4 478 694 A1**

REFERENCES CITED IN THE DESCRIPTION

**Patent documents cited in the description**

- CN 202211100941